# EUROPÄISCHE PATENTSCHRIFT

(11) **EP 0 870 291 B1**
(45) Veröffentlichungstag und Bekanntmachung des Hinweises auf die Patenterteilung: **10.10.2001**
(21) Anmeldenummer: 96937295.2
(22) Anmeldetag: 30.10.1996
(51) Int. Cl.: G08G 3/00

(54) **VERFAHREN ZUR VERKEHRSÜBERWACHUNG UND VERKEHRSLENKUNG UND POSITIONSBESTIMMUNG UND INFORMATIONSÜBERMITTLUNG VON UND ZU MOBILEN OBJEKTEN, INSBESONDERE SCHIFFEN, UND ZUR DEZENTRALEN ERFASSUNG DER LOKALEN VERKEHRSSITUATION IN DER UMGEBUNG DES MOBILEN OBJEKTES**
METHOD OF CONTROLLING AND GUIDING TRAFFIC, DETERMINING POSITIONS, AND TRANSMITTING INFORMATION FROM AND TO MOBILE OBJECTS, IN PARTICULAR SHIPS, AND FOR THE DECENTRALIZED DETECTION OF THE LOCAL TRAFFIC SITUATION IN THE VICINITY OF THE MOBILE OBJECT
PROCEDE DE CONTROLE ET D'AIGUILLAGE DU TRAFIC, DE DETERMINATION DE POSITION ET DE TRANSMISSION DE DONNEES EMISES ET RE UES PAR DES OBJETS MOBILES, NOTAMMENT DES BATEAUX, ET DE DETECTION DECENTRALISEE DE LA SITUATION LOCALE DU TRAFIC AU VOISINAGE DE L'OBJET MOBILE CONCERNE

(30) Priorität: 31.10.1995 DE 19540550
(43) Veröffentlichungstag der Anmeldung: 14.10.1998
(73) Patentinhaber: Klaczko, Salomon, 22587 Hamburg (DE); Fiebelkorn, Jörg, G., 22607 Hamburg (DE)
(72) Erfinder: Klaczko, Salomon, 22587 Hamburg (DE); Fiebelkorn, Jörg, G., 22607 Hamburg (DE)
(74) Vertreter: Pohl, Manfred, Dr.
(86) Internationale Anmeldenummer: EP9604715
(87) Internationale Veröffentlichungsnummer: WO9716808

(56) Entgegenhaltungen:
- EP-A- 0 154 018
- EP-A- 0 562 940
- IEEE SPECTRUM, Bd. 31, Nr. 12, 1.Dezember 1994, Seiten 24-31, XP000495413 "NAVIGATING CLOSE TO SHORE"
- AUTOMATISIERUNGSTECHNISCHE PRAXIS - ATP, Bd. 35, Nr. 10, 1.Oktober 1993, Seiten 543-552, XP000408731 GILLES E D ET AL: "AUTOMATISIERUNG DES SCHIFFSVERKEHRS AUF WASSERSTRASSEN AUTOMATION OF THE TRAFFIC ON WATERWAYS"

## Beschreibung

Die Erfindung betrifft ein Verfahren zur Verkehrsüberwachung und Verkehrslenkung und Positionsbestimmung und Informationsübermittlung von und zu mobilen Objekten, insbesondere Schiffen, und zur dezentralen Erfassung der lokalen Verkehrssituation in der Umgebung des mobilen Objektes.

Lotsen begleiten Schiffe in Küstengewässern, auf Flüssen und Häfen seit Jahrhunderten. Ihre Aufgabe, den Schiffsführer zu beraten, hat sich im Grundsatz nicht gewandelt, ist allerdings verantwortungsvoller geworden. Der Schiffsverkehr steigt und größere Schiffe müssen im enger werdenden Fahrwasser geführt werden. Aus ökonomischen Gründen müssen auch unter widrigsten Bedingungen Häfen zeitsicher angelaufen und verlassen werden können. Die Aufgabe der Lotsen geht zunehmend weit über die Beratung des Schiffsführers hinaus, wobei die Lotsen defacto für die Navigation der Schiffe im Hafen und in den Revieren voll verantwortlich handeln. Die Lotsen in den Revieren und im Hafen sind bei der Bestimmung von Ort, Kurs und Geschwindigkeit der von ihnen geführten Schiffe neben ihrer Erfahrung und ihrem Wissen auf die Angaben der stationären radargestützten Verkehrsleitsysteme, der Rundspruchdienste für Wetter, Wasserstände und Prognosen und der schiffseigenen Navigationshilfen angewiesen. Die bekannten Systeme und Verfahren reichen nicht aus, um Fehler in kritischen Navigationsfällen zu vermeiden. Die schiffseigenen Systeme entsprechen in vielen Fällen nicht den Forderungen an die im engen Fahrwasser erforderliche Präzision. Bei Geräteausfall ist der Lotse dann allein auf Sprechfunkverbindungen über sein eigenes Handgerät angewiesen. Zu den Verkehrsleitsystemen gehören Radarketten, die Position, Richtung und Geschwindigkeit nur in den Verkehrs- und Revierzentralen aber nur mit erheblichen Fehlern von bis zu einer ganzen Schiffsbreite abbilden, und wo neben der Beratung kritische Daten per Sprechfunk an die Lotsen übermittelt werden müssen. Die Identifikation der Schiffe auf dem Radarbild ist nur über Sprechfunk möglich. Plötzliche Sichtverschlechterung erfordert eine komplizierte und zeitaufwendige Aktivierung der Radarführung, wobei gerade in dieser Übergangsphase das Unfallrisiko besonders hoch ist. Die Wasserstände und Vorhersagen werden regelmäßig über Sprechfunkkanäle - bezogen auf wenige Pegelmeßstellen - angegeben. So gibt es bspw. zwischen dem Hamburger Hafen und der Elbmündung nicht einmal eine Meßstelle pro 10 km. Aus diesen Mitteilungen muß der Lotse selbst den Bezug zur eigenen Position herstellen, vorausgesetzt, er konnte die Durchsage mithören. Insgesamt belastet die allein auf Sprache gestützte Kommunikation die Lotsen in ihrer Aufgabe in hohem Maße, da stän-dig mehrere Kanäle abgehört werden müssen, um in der Krise aus den parallelen Gesprächen die wichtigen Informationen herausfiltem zu können. Die Dauer der Revierfahrt in Verbindung mit der Ungenauigkeit der Pegelvorhersagen engt das Zeitfenster für den Zu- und Abgang großer Schiffe zum Hafen ein, so daß die tatsächliche Wassertiefe nicht voll ausgenutzt werden kann. Da die Kommunikation zur Steuerung des Verkehrsablaufes auf UKW-Sprechfunk/Telefon angewiesen ist und über verschiedene Stellen abläuft, geht wertvolle Zeit für die betriebliche Planung auf den Schiffen und im Hafen verloren.

Zur Verbesserung der Navigation und der Ermittlung von fremden Schiffsbewegungen ist es durch die EP-A-0 154 018 vorgeschlagen worden, die auf einem Anzeigegerät für eine elektronische Karte dargestellten Angaben über die das Schiff betreffenden Merkmale des Seegebiets durch Angaben zu ergänzen bzw. zu korrigieren, die von einer außerhalb des Schiffes befindlichen Vermittlungsstelle an das Anzeigegerät übertragen werden. Durch dieses bekannte Verfahren ist jedoch keine simultane, dezentrale, real-time Verkehrslagedarstellung in Client-Server Architektur möglich. Es ist ferner nicht möglich der Bezug zur objektorientierten geo-referenzierten Datenbank als Darstellungshintergrund, die über eine regelmäßige Übertragung der Daten anderer Objekte hinausgehende real-time Darstellung ihres dynamischen Verhaltens, die Darstellung des Fehlerwinkels Kiellinie/Fahrtrichtung, die Ermittlung der Wendegeschwindigkeit über GPS und ihre Abbildung, die Darstellung der 3-dimensionalen Geometrie des Schiffes, die Übertragung von Radarbildern - und damit nicht nur der Position von Radarechos. Darüber hinaus ist eine mobile Sensorik nicht vorgesehen. Aufgrund dieser Nachteile hat sich dieses vorbeschriebene Verfahren im Einsatzbereich nicht durchsetzen können.

Die Aufgabe der Erfindung besteht darin, ein Verfahren und eine Anlage zur Durchführung des Verfahrens aufzuzeigen, mittels der die bestehenden Einrichtungen der Verkehrssicherung in den Revieren und im Hafen wie Radar und UKW-Sprechfunk durch unabhängige Geräte für die Navigation und Kommunikation der Lotsen ergänzt werden. Die Lotsen sollen mit einer von Schiff und schiffseigenen Radar unabhängigen einheitlichen Einrichtung zur automatisierten Darstellung von Fahrwasser, Strom, Gezeiten, Wasserständen, Prognosen, Dimensionen des geführten Schiffes, der Position (auch zur Kontrolle des Bordradars), der Richtung (relativ und absolut - auch zur Kontrolle des Bordkompaß), der relativen und absoluten Geschwindigkeit, der Wendegeschwindigkeit, der individuellen automatischen Identifikation zur Vereinfachung beim Übergang zur Radarberatung und der Verkehrslage im Interessenbereich ausgestattet werden können. Die Systemkomponenten müssen kompatibel mit dem Informationsnetz der Verkehrs- und Revierzentralen sein, externe Daten übernehmen können, wie Pegelstände, Peildienst, Wetter, Schiffsdimensionen, Radardaten, einen zeitnahen Überblick über die Verkehrslage am Ort, in den Revierzentralen und in den Lotsensachen ermöglichen, die erforderliche Genauigkeit der Daten bieten, bezüglich Ortgeschwindigkeit, Wendeanzeige, in einem dem Sicherheitsgewinn entsprechenden Kostenrahmen bleiben und die Lotsen von Routinemitteilungen und Parallelmeldungen an mehrere Empfänger entlasten. Ferner sind physikalische Rahmenbedingungen zu berücksichtigen, wie Betriebssicherheit, Gewicht, Nässeschutz, Stoßunempfindlichkeit, leichte Handhabung und unabhängige Energieversorgung.

Erfindungsgemäß erfolgt die Lösung der Aufgabe bezüglich des Verfahrens durch die kennzeichnenden Merkmale des Anspruchs 1 und bezüglich der Anlage durch die kennzeichnenden Merkmale des Anspruchs 21. Vorteilhafte Ausgestaltungen der Erfindung werden in den abhängigen Ansprüchen beschrieben.

Nach der Erfindung ist über elektronische Landseekarten und satelliten- und bodenunterstützte Empfangsgeräte eine genaue graphische und rechnerische Positionsbestimmung von mobilen Objekten sowie eine genaue Informationsübermittlung von und zu mobilen Objekten möglich. Die Positionsbestimmung erfolgt mit einer um zwei Größenordnungen höheren Präzision als durch Radar. Ferner ist gegenüber Sprechfunk eine wesentlich sichere Nachrichtenübermittlung durch verschlüsselten Digitaltext und Visualisierung durch graphische Benutzeroberflächen möglich. Die Lotsen können nach der Erfindung so ausgestattet werden, daß sie den immer anspruchsvolleren Forderungen zur Führung immer größerer Schiffe im kritischen Fahrwasser gewachsen bleiben. Es wird ein hoher Standard der Positionierung und der allgemeinen nautischen Informationen an Bord erreicht, so daß der Informationsstand der Lotsen auf die gleiche Ebene wie in den jeweiligen Verkehrszentralen angehoben wird. Die Lotsen erhalten rechtzeitig ein Lagebild ihres Interessenbereiches, das für die Bewältigung einer möglichen Krise hinreichend aussagefähig ist. Dies wird durch die erfindungsgemäße Dezentralisierung der Verkehrslenkung ermöglicht. Die Reaktionsfähigkeit der Lotsen wird dadurch erhöht, daß sie selbst ein vollständiges Verkehrslagebild ihres Interessenbereiches erhalten und der Sprechfunkverkehr auf das geringstmögliche Maß eingeschränkt wird. Lediglich die großräumige strategische Verkehrslenkung verbleibt in den Verkehrszentralen, speziell dort, wo das Fahrwasser Engpässe aufweist. Darüber hinaus können die Lotsenwachen ihre administrativen Aufgaben, insbesondere die Planung und Einteilung der Lotsen und Lotsenversetzboote in genauer Kenntnis der Position der Lotsen und Schiffe, besser planen, ein Protokoll aller Lotsungen durchführen und den Lotsen ein aktuelles Kartenbild übermitteln. Die Ortung der Ziele im Verkehrslenkungssystem wird durch die DGPS-Ortung der Lotsen unterstützt. Durch die eindeutige Positionierung, Identifikation und das Eintragen der Schiffsdimensionen wird der aufwendige Weg der Digitalisierung des diffusen analogen Radarechos umgangen, das sich mit der Lage des Zieles zum Radar ständig verändert und bei Richtungsüberlappung mehrdeutig wird. Die dichtere Folge der Ortungen in GPS, unabhängig von der Lage des Zieles zum Radar, ermöglicht eine wesentlich vereinfachte und um zwei Größenordnungen genauere Berechnung von Geschwindigkeit, Richtung und Wendegeschwindigkeit. Die Probleme bei der Identifizierung von Überholem, Vorbeifahrem im Radarschatten, Verzerrungen durch Heckwellen, Doppelechos oder Abschattungen werden ausgeschlossen. Femer kann nach der Erfindung die vollständige Dokumentation der Verkehrsabläufe wesentlich vereinfacht werden und sich über einen beliebig langen Zeitraum erstrecken. Grundlage bleibt das Radarbild, da nur mit Radar eine vollständige Erfassung aller Ziele möglich ist. Mit erfindungsgemäßen Einrichtungen ausgestattete Ziele wie Lotsen und Dienstfahrzeuge überdecken auf der Karte ihr eigenes Radarecho und werden mit ihren realen Dimensionen und Eigenschaften abgebildet. Die echten Festziele werden durch ein elektronisches Kartenanzeige- und Informationssystem ersetzt. Nachrichten können nach Bedarf in den jeweiligen Bildschirm eingeblendet werden. Die Position der mit erfindungsgemäßen Einrichtungen ausgestatteten Schiffe wird automatisch abgebildet und entlastet somit den Schiffsmeldedienst von der Aufnahme von Routinedurchsagen und Abfragen. Die Schiffsankünfte können den Bedarfsträgern und Kunden zeitnäher übermittelt werden. Die beim Schiffsmeldedienst vorhandenen Schiffsinformationen können automatisch an die Lotsen weitergegeben werden. Hierbei kann der Schiffsmeldedienst die Geometriedaten und nautischen Eigenschaften der Schiffe den Lotsen zur Verfügung stellen. Teildaten können direkt und damit zeitnah in die Datenbank des elektronischen Kartenanzeige- und Informationssystem eingetragen werden und stehen dort aktuell zur Verfügung, so daß das manuelle Herstellen und Verteilen von Korrekturkarten für den Lotsendienst entfällt.

Nach der Erfindung wird die Position eines Lotsen und eines Schiffes über GPS und vor dem Hintergrund des geographischen elektronischen Kartenanzeige- und Informationssystems abgebildet. Um eine angemessene Genauigkeit zu erzielen, wird GPS durch DGPS-Differenzsignale ergänzt, womit die Position des Schiffes auf ein 1 m genau festgelegt werden kann. Hierzu ist es erforderlich, daß die Antenneneinheit der Lotseneinrichtung getrennt von dem Sichtgerät außerhalb der Brücke angebracht und die Entfernung Antenneneinheit/Kiellinie des Schiffes definiert werden muß. Aus der hohen Meßfolge im DGPS können dann alle dynamischen Werte des Schiffes abgeleitet werden. Auf der Basis der gemessenen Position, Geschwindigkeiten und Richtung kann in den Verkehrszentralen und auf den Schiffen rechtzeitig vor der Gefahr einer Kollision oder dem Auflaufen auf Hindernisse gewarnt und auch auf durch das Fahrwasser bedingte Richtungsänderungen hingewiesen werden. Dies erfolgt nach Extrapolation der Richtungsvektoren über die für die Korrekturmanöver erforderliche Reaktionszeit. Zusätzlich werden im Netz Meldungen, Abfragen und allgemeine Informationen verteilt. Das Netz gewährleistet einen automatischen Verbindungsaufbau und -abbau für die mobilen Teilnehmer. Dies wird dadurch erreicht, daß das Netz ein System von elektronischen Mailboxen mit geeigneten Zugangskontrollen, Identifikationen und Adressierungen erzeugt. Als Nebenergebnis entstehen dabei eine Sicherung des Datenverkehrs gegenüber Störungen und Ausfällen mittels automatischer Fehlererkennung und -korrektur und eine Sicherung des Datenverkehrs gegen unbefugte Eindringlinge.

Das elektronische Kartenanzeige- und Informationssystem ermöglicht die Darstellung eines gewohnten Kartenbildes im lagegerechten Maßstab und Ausschnitt sowie die Option auf wesentliche Inhalte. Solange parallel mit Radar gearbeitet werden muß, kann das Bild des Bildschirms auch auf eine Radarlinie mit einfacher Rechts-Links-Abweichung reduziert, statt eine volle Seekarte zu liefern. Nach der Erfindung ist es ferner möglich, in Textbausteinen vorformulierte und frei formulierte Meldungen und Abfragen im Datennetz zu übermitteln. Mehrfachadressaten werden automatisch erkannt und berücksichtigt. Durch kontinuierliche Datensicherung ist eine vollständige Aufzeichnung aller Objekte, ihres Verhaltens und der Ereignisse möglich. Den Lotsen ist freigestellt, durch eigene Eingaben ihre Anweisungen an die Schiffsführung aufzuzeichnen. Damit kann eine exakte Sicherung aller Abläufe im Hafen und den Revieren über einen beliebigen Zeitraum ermöglicht werden. Jeder Lotse ist damit in der Lage, schiffs- und landgestützte Navigationsmittel wie Radar teilweise zu überwachen, zu kontrollieren und im Bedarfsfall zu ersetzen. Er verfügt stets über ein vollständiges Abbild der Verkehrslage.

Nach der Erfindung können zwei oder mehrere elektronisch in objektorientierten Datenbanken gespeicherte vektorielle Landseekarten laufend miteinander kommunizieren, um sich gegenseitig zu aktualisieren. Dies kann z.B. im Client-Server-Verfahren erfolgen, wobei Kundenkarten, speziell solche, die mobil auf dem Schiff in einem Mikrorechner installiert sind, von den an Land fest installierten als Server dienenden Rechnern mit Informationen versehen werden. Dies kann auf eigenen Wunsch der Kundenkarte oder aufgrund eines Ereignisses wie z.B. eines Unfalls, einer Flutwarnung oder eines Auslaufs eines Schiffes oder aber auch durch Selbstauslösung erfolgen wie z.B. bei Korrektur eines Parameters oder einer Objektidentifikation. Die Kundenkarte kann den Server aufrufen, um sich anzumelden, um sich abzumelden oder um spezielle Auskünfte zu verlangen. Hierdurch ist eine Aktualisierung aller Informationen über Änderungen im Revier möglich. Die Kundenkarte kann ihre navigatorische Hilfsfunktion ggfs. auch bei Ausfall des Servers oder des Datenfunknetzes autonom weiterführen, wobei unvermeidliche Einschränkungen zu berücksichtigen sind. Von Vorteil ist es, Bagger- und Peilschiffe in das System einzubinden, da deren Daten dann aktuell in die zentralen Datenbanken eingespeichert werden können, so daß die Landseekarten aktualisiert werden können. Zweckmäßig ist es, Benutzer der Anlage während der Fahrt entweder stochastisch oder systematisch lokale Messungen wie insbesondere Strömungsmessungen durchführen zu lassen. Diese Benutzer dienen dann als verteilte Sensoren, die ihre Meßergebnisse dem zentralen Rechner der Anlage zur Verfügung stellen, der sie dem hydrographischen Zentralrechner übermittelt. Letzterer kann dann seine mathematischen Modelle verifizieren, validieren und kalibrieren, so daß von Messung zu Messung die Prognosegenauigkeit gesteigert wird. Ausbreitungskarten von Ereignisketten wie z.B. Unfällen, hydrographischen Prozessen, Strömungsscherungen, Böen o.dgl. können aus der Systemdatenbank entnommen werden, aber auch vom einzelnen Benutzer eines mobilen Rechners aus einer portablen Lokaldatenbank, sofern in dieser der Ablauf der Ereignisse lokal aufgenommen ist. Es ist auch möglich, einen Schleppkonvoi aus einem geschleppten Schiff und einem oder mehreren Schleppern komplett und in der jeweils momentanen Geometrie auf den mobilen Landseekarten abzubilden, wobei der kommandierende Lotse und die Schlepperkapitäne selbst bei dichten Nebel oder bei Nacht ihre jeweilige Eigenposition und die der anderen Konvoipartner unter Berücksichtigung der zeichnerischen Kartenaufsicht auf der Karte sehen können. Um einen über das ganze Revier verteilten virtuellen Supercomputer auszubilden, können die zentralen Serverrechner an Land bestimmte lokale Rechenaufgaben an die mobilen Rechner an Bord der diversen Schiffe im Revier als abgesetzte intelligente Sensoren delegieren und die Datenfusion der verschiedenen Sensoren zu einem Gesamtbild laufend selber zusammenstellen. Dabei werden die verteilten Datenaufnahmen mit dem Zeitstempel der Aufnahme und mit dem Positionsstempel des DGPS-Sensors versehen, so daß kausale Ketten von Ereignissen, die sich zwei- oder dreidimensional verteilt entwickeln, über die Protokolliereinrichtung des Gesamtsystems exakt rekonstruiert werden können. So kann z.B. die zeitliche und räumliche Verteilung bzw. Ausbreitung einer Giftgaswolke nach der Explosion eines Chemikalientankschiffes im Fahrwasser nachvollzogen werden.

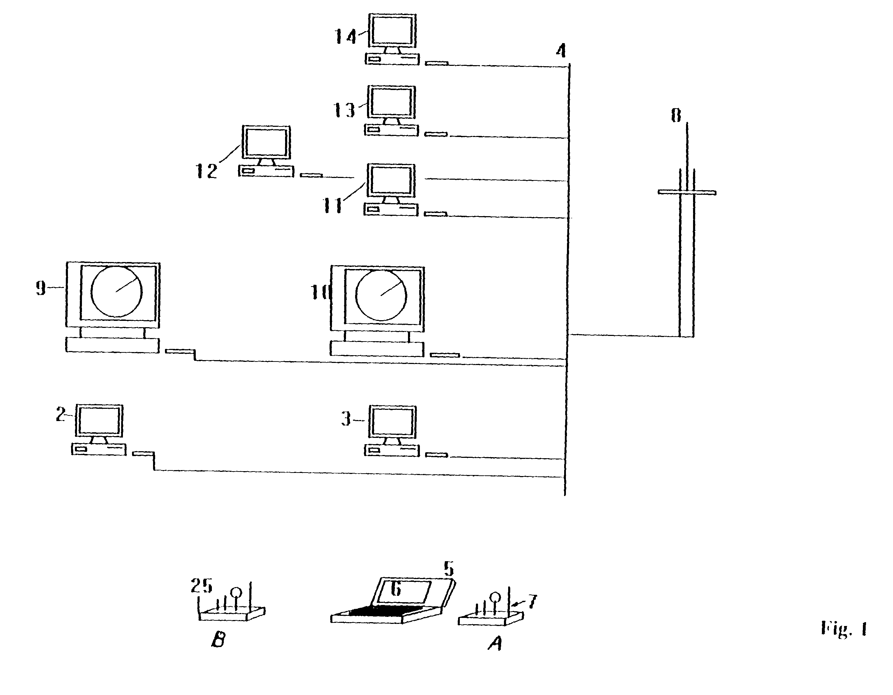

Die Erfindung wird nachstehend anhand der in den folgenden Zeichnungen beispielhaft dargestellten Einzelheiten der Anlage zur Durchführung des Verfahrens näher erläutert. Es zeigt
- Fig. 1: die Vernetzung der Teilsysteme der Anlage in einer schematischen Darstellung
- Fig. 2: die Lotseneinrichtung der Anlage nach Fig. 1 in einer schematischen Darstellung,
- Fig. 3: das Schaltbild einer Antenneneinheit für die Lotseneinrichtung,
- Fig. 4: die logische Verknüpfung der Antenneneinheiten,
- Fig. 5: das Datenflußdiagramm der automatisierten Nachrichten,
- Fig. 6: ein Datenflußdiagramm bedarfsgesteuerter Nachrichten,
- Fig. 7: die neun logischen Hauptserver der Anlage nach Fig. 1,
- Fig. 8 und 9: schematische Beispiele kartesischer Verknüpfungsmatrizen,
- Fig. 10: ein Blockdiagramm der Lotseneinsatzplanung,
- Fig. 11: ein Blockdiagramm über die Bedienungsplanung von Schiffen mit lokalen Lotsen,
- Fig. 12: eine Bildschirmdarstellung,
- Fig. 13: eine weitere Bildschirmdarstellung,

Die Anlage 1 zur Positionsbestimmung eines Schiffes und zur Information über die Verkehrslage besteht aus ortsfesten Rechnern 2, 3, die an eine Datenübermittlungsleitung 4 wie z.B. Datex-P angeschlossen sind, und mobilen Lotseneinrichtungen 5. Der Rechner 2 ist einer Lotsenwache im Hafen und der Rechner 3 ist einer Lotsenwache im Revier wie z.B. einem Fluß zugeordnet. Die Lotseneinrichtungen 5 bestehen jeweils aus einem tragbaren Rechner 6 und zwei Antenneneinheiten 7, 25. Die Datenübertragungsleitung 4 ist mittels einer Sende-/Empfangsstation 8 an ein Mobilfunknetz wie z.B. MODACOM angeschlossen, so daß jede Lotseneinrichtung 5 über ihre Antenneneinheit 7 mit den an die Datenübermittlungsleitung 4 angeschlossenen Einrichtungen kommunizieren kann. Als gegenüber der Anlage 1 externe Einrichtungen sind die Rechner 9 - 14 der Revierzentrale, der Verkehrszentrale, des Schiffsmeldedienstes, des Oberhafenamtes, des Bundesamtes für Seeschiffahrt und Hydrographie und der Kaibetriebe an die Datenübertragungsleitung 4 angeschlossen. Die Anlage 1 kann somit die Daten schon bestehender Einrichtungen nutzen, z.B. Radarbilder, Peildaten, Tiden, Schiffsdaten etc..

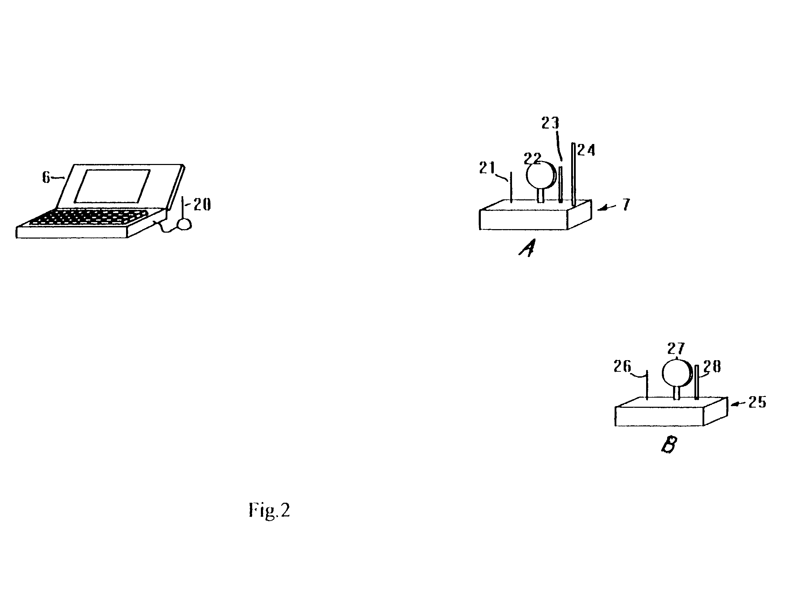

Die Lotseneinrichtung 5 umfaßt mehrere Komponenten (Fig. 2). An den Rechner 6 ist eine Sende-/Empfangseinheit 20 angeschlossen, die Daten von den Antenneneinheiten 7, 25 empfängt und/oder an diese sendet. Die Antenneneinheit 7 besitzt neben der Sende-/Empfangseinheit 21, Empfangseinheiten für DGPS und GPS-Signale 22, 23 und eine Datensende-/-empfangseinheit 24, die Daten mit der Sende-/Empfangsstation 8 austauscht Die zweite Antenneneinheit 25 besitzt eine Sendeeinheit 26, die Daten an die Sende-/Empfangseinheit 20 übermittelt und Empfangseinheiten für GPS- und DGPS-Signale 27, 28. Der Rechner 6 und die Antenneneinheiten 7, 25 haben eine Eigenenergieversorgung und Anschlüsse für Fremdenergieversorgung und sind spritzwasser-, explosions- und stoßgeschützt. Die Antenneneinheiten 7, 25 sind vorzugsweise außerhalb der Brücke angebracht.

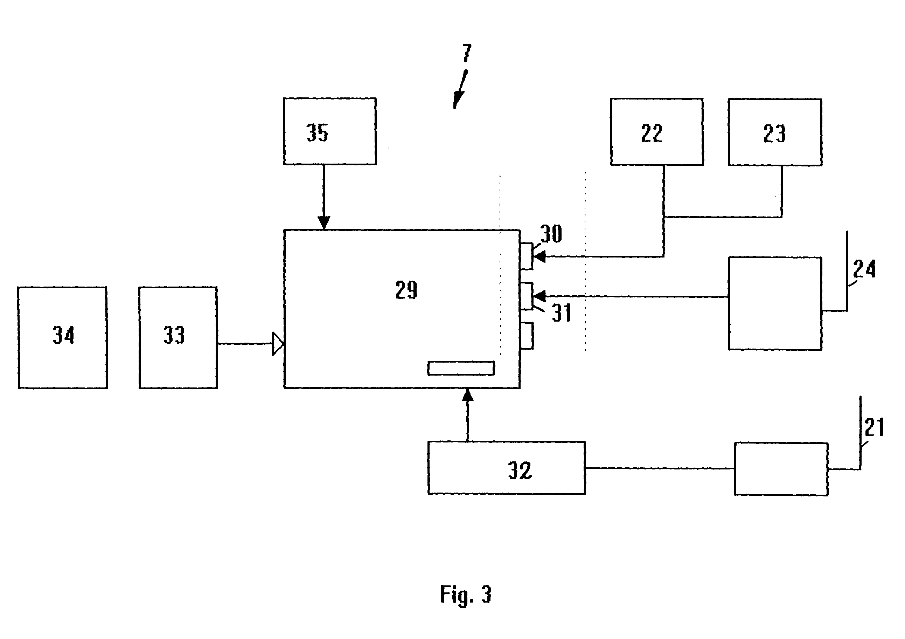

Das Schaltbild der Antenneneinheit 7 ist in Fig. 3 dargestellt. In einer Rechnereinheit 29 sind über die Schnittstellen, vorzugsweise serielle Schnittstellen, die GPS und DGPS-Empfangseinheiten 22, 23 und die Datensende-/-empfangseinheit 24 angeschlossen. Über jeweils ein Interface 32 bzw. 33 sind die Sende-/Empfangseinheit 21, bzw. ein Accelerometer 34 mit der Rechnereinheit 29 verbunden. Die Energieversorgung 35 versorgt die Rechnereinheit mit Energie.

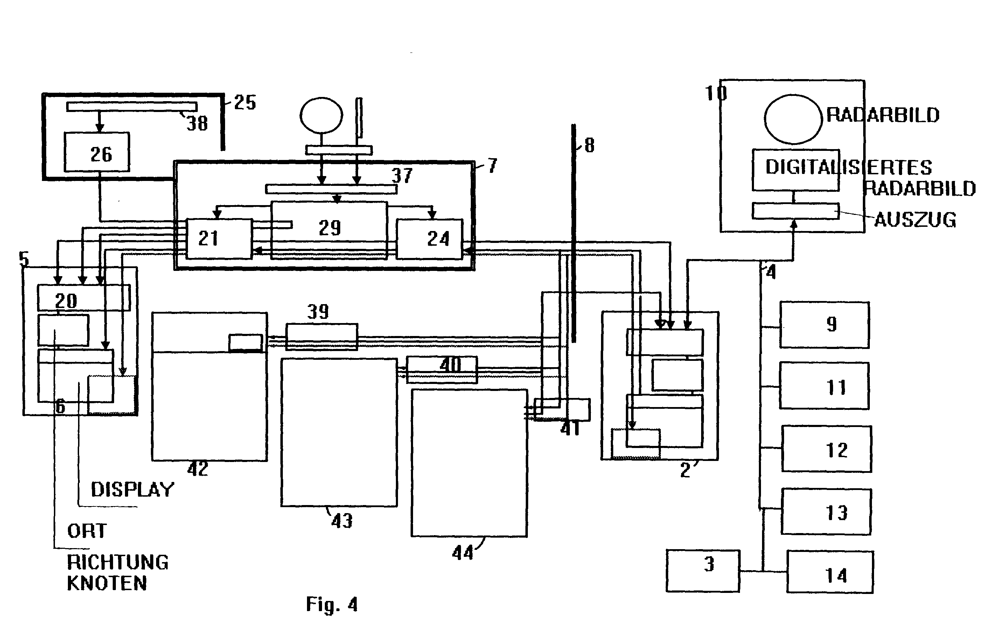

Fig. 4 zeigt die Logik der Antenneneinheiten 7, 25. Die Antenneneinheit 25 ermittelt mittels der GPS-/DGPS-Empfangseinheiten 27, 28 die Positionsdaten 38, die mittels der Sendeeinheit 26 an die Sende-/Empfangseinheit 20 gesendet werden, und von dieser in den Rechner 6 weitergeleitet werden. In der Antenneneinheit 7 werden aus den GPS- bzw. DPGS-Sendeeinheiten die Positionsdaten 37 an die zentrale Rechnereinheit 29 übermittelt, die mittels der Sende-/Empfangseinheit 21 an die Sende-/Empfangseinheit 20 gesendet und an den Rechner 6 weitergeleitet werden. Die Antenneneinheiten 7, 25 sind vorzugsweise räumlich getrennt voneinander installiert, z.B. auf der Back- und Steuerbordnock oder am Bug und Heck. Aus den von den Antenneneinheiten 7, 25 an den Rechner 6 übermittelten Daten und einer exakten Definition der Lage der Antenneneinheiten zur Kiellinie kann mittels entsprechender Algorithmen das dynamische Verhalten des Schiffes ermittelt werden, z.B. Differenz und/oder Kolinearität, Parallelität bzw. Perpendikularität der Lagen und der Bahn der Antenneneinheiten zueinander und zur Kiellinie, aktuelle Winkelgeschwindigkeit etc.. Ebenso kann aus einer Extrapolation der entsprechenden Daten eine Prognose über die zu erwartende Bahn des Schiffes erstellt werden.

Die im Rechner 6 ermittelten Daten werden anschließend mittels der Kette von Sende-/Empfangseinheiten 20, 21, 24 über die Sende-/Empfangsstation 8 an den Rechner 2 übertragen. Gleichzeitig werden ebenfalls Daten der Lotsenrechner 42, 43, 44 auf anderen Schiffen mittels der Antenneneinheiten 39, 40, 41 über die Sende-/Empfangsstation 8 an den Rechner 2 übermittelt. Aus diesen angelieferten Daten und entsprechenden Daten, die von den Rechnern 9 - 14 bereitgestellt und/oder angefordert werden, werden im Rechner 2 mittels entsprechender Algorithmen und dynamischer Dimensionen relevante, für das jeweilige Schiff betreffende Daten berechnet und aktualisiert. Diese werden dann anschließend in die dem Funkdatennetz angeschlossenen Rechner 6, 42, 43, 44 der Schiffe über die Sende- und Empfangsstation 8 aktualisiert übertragen, so daß im Rechner 6 mittels der eigenen und den aktualisierten Daten die neue Verkehrssituation im eigenen Interessenbereich zeitnah dargestellt werden. Dies gilt auch für die anderen Lotsen-Rechner 42, 43, 44 auf den anderen Schiffen.

Fährt beispielsweise ein Schiff ein Wendemanöver und der Rechner 42 überträgt die entsprechenden Daten an den Rechner 2, so wird die neue Verkehrssituation für die betreffenden Schiffe, deren Rechnern 6, 43, 44 übermittelt, so daß die bisherige Position oder Bahn des Schiffes korrigiert werden kann. Es werden an die Teilnehmer nur die Positionsdaten anderer Objekte automatisch übermittelt, die sich im Interessensbereich befinden. Als Interessenbereich gilt das Gebiet, das ein Lotse zur sicheren Beurteilung der Verkehrslage, der rechtzeitigen Erkennung möglicher Gefahren und planmäßiger Reaktion - Einleitung und Ausführung von Manövern - übersehen muß.

Zur umfassenden Darstellung und Verarbeitung der Daten über die aktuelle Verkehrslage und ihrer Veränderung im Interessenbereich eines Schiffes müssen die Daten zeitnah und automatisch übertragen werden. Dazu dienen automatische und bedarfsorientierte Daten und Nachrichten. Automatische Nachrichten werden ausgelöst durch im Voraus bestimmte Zeitintervalle und/oder durch Eintritt von Ereignissen aus einem vorgeschriebenen Katalog von Ereignissen (Ereignis-Katalog), z.B. Eintritt eines anderen Objektes in den eigenen Interessenbereich. Bedarfsorientierte Nachrichten werden manuell durch Eintritt von manuellen Ereignissen aus dem Ereignis-Katalog z.B. Mann über Bord übertragen. Die automatischen und bedarfsorientierten Nachrichten haben die allgemeinen Eigenschaften: Typ, Inhalt, Zeittakt, Versender, Versendezeit, Empfänger, Priorität. Sie besitzen einen entsprechenden Satzaufbau.

Automatische Nachrichten des Typs 1 (AN1) dienen zur ständigen Positionsmeldung aller Teilnehmer und übermitteln wesentliche dynamische Daten. Automatische Nachrichten des Typs 2 (AN2) sind die von dem Rechner 2 an Adressaten nach Interessensbereich ausgewählten und weitergeleiteten Nachrichten des Typs 1 (AN1). Die Nachricht AN3 enthält die aus dem Radarbild gefilterten Positionen von Objekten. Die Positionen des Radarbildes sind mit ca. +/- 15 m ungenauer als die GPS-georteten Ziele, ihr Ort wird daher mit 10stelligen Koordinaten angegeben.

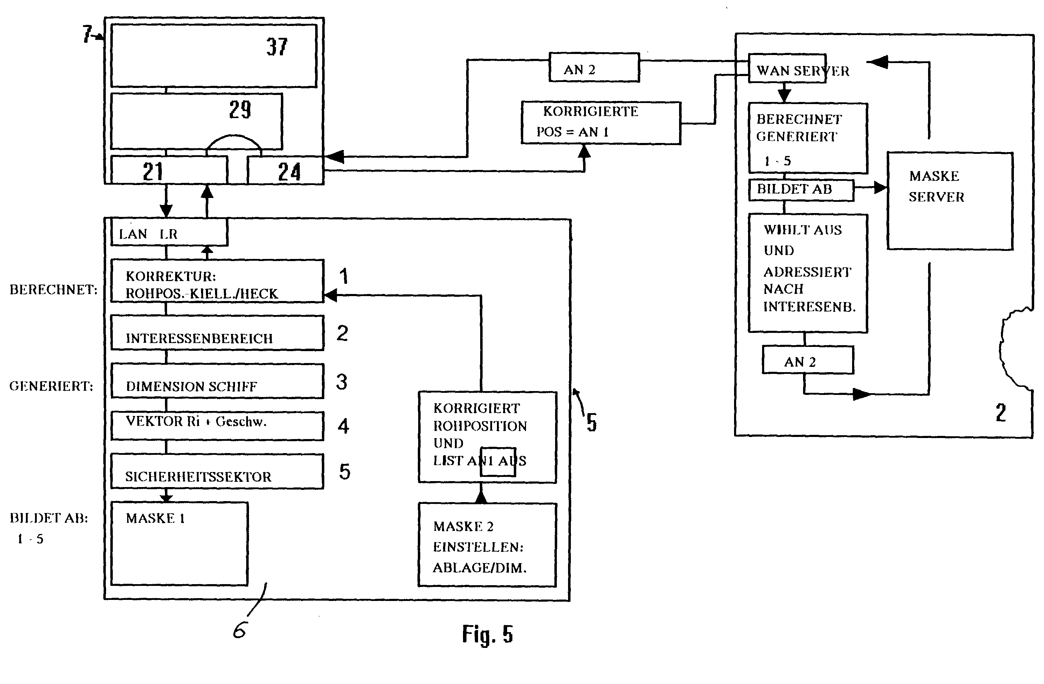

Der Funktionsablauf einer Übermittlung von AN1 und AN2 ist in Fig. 5 dargestellt. Die DGPS-georteten Rohdaten 37 der Antenneneinheit 7 werden über die Rechnereinheit 29 weitergeleitet zur Übertragung mit den Sende/Empfangseinheiten 20, 21 an den Lotsenrechner 6. Die übertragenen Rohdaten 37 werden entsprechend nach Vorgabe korrigiert, Richtung und Geschwindigkeit des Schiffes werden berechnet und ein Interessenbereich und Sicherheitssektor ermittelt. Anschließend findet ein Versenden der AN1 über die Sende-/Empfangsstation 8 an den Rechner 2 statt. An diesen Rechner 2 werden die Daten der beteiligten Verkehrsteilnehmer gesendet. Der Rechner 2 ermittelt die für den Interessenbereich des jeweiligen Adressaten relevanten Daten (AN2) bzw. Nachrichten und leitet sie über die Sende-/Empfangsstation 8 an den Rechner 6 des Adressaten.

Bedarfsorientierte Nachrichten werden manuell ausgelöst, um eine ergänzende Kommunikation zwischen den Teilnehmern zu ermöglichen, oder wenn relevante Ereignisse eintreten, wie z.B. lokale Notfallwamungen (Kollision, Strandung, etc.). Bedarfsorientierte Nachrichten des Typs 1 (BN1) dienen der Anfrage bezüglich wichtiger Schiffsdaten, Typ 2 (BN2) enthält die Antwort bezüglich der Schiffsdaten auf BN1. Typ 3 der bedarfsorientierten Nachrichten (BN3) stellt eine Korrektur von BN2 dar. Daneben gibt es eine Reihe von anderen bedarfsorientierten Nachrichten.

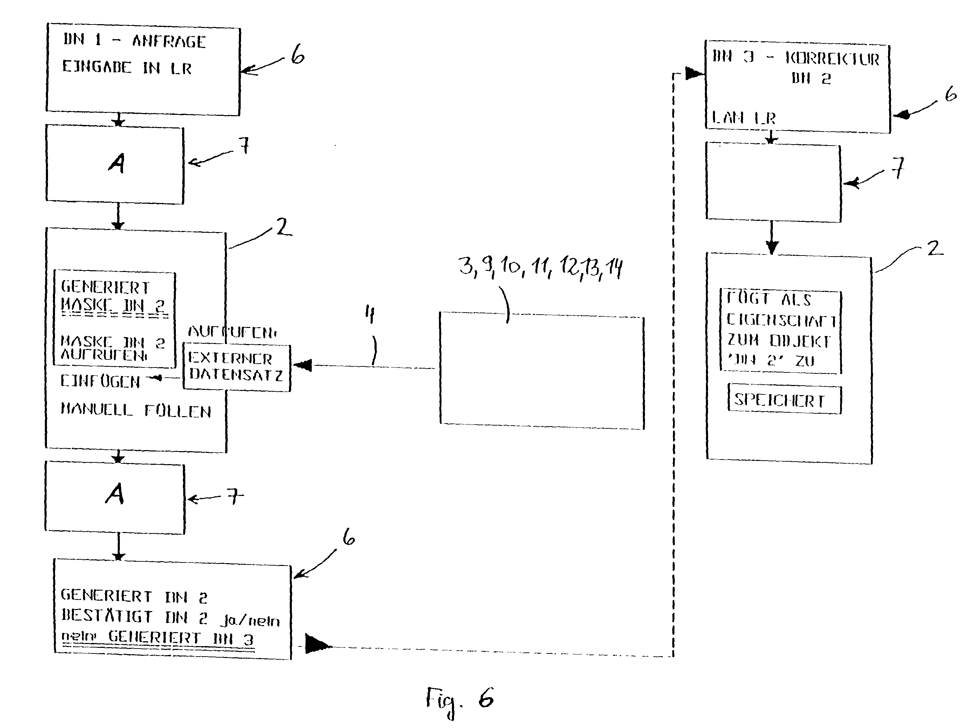

Fig. 6 verdeutlicht beispielhaft den Datenfluß von bedarfsorientierten Nachrichten BN1, BN2, BN3. Nach Eingabe der Anfrage bezüglich der Schiffsdaten (BN1) in den Lotsenrechner 6 werden die Daten über die Sende-/Empfangsstation 8 an den als Server dienenden Rechner 2 weitergeleitet. Der an diesen Server 2 über die Datenübermittlungsleitung 4 angeschlossene Rechnerpool, bestehend aus den Rechnern 3, 9 - 14, liefert die von dem Rechner 2 angeforderten Informationen, sofern sie nicht schon im Rechner 2 selbst vorhanden sind. Liegen die Schiffsdaten (BN2) vor, werden sie über die Sende-/Empfangsstation 8 in den Rechner 6 übertragen. Werden die übermittelten Daten nicht bestätigt und erfolgt eine Korrektur und damit Generierung von BN3, wird diese Nachricht über die Sende-/Empfangsstation 8 in den Server 2 übermittelt. Dem entsprechenden Objekt (BN2) werden die korrigierten Daten bzw. Eigenschaften hinzugefügt und gespeichert.

Das Datenkommunikationsnetz zur Abbildung sich bewegender Objekte erfüllt die Eigenschaften, in der einen Richtung die gemessene Position dieser Ziele und in der anderen Richtung komprimierte Daten mit allen anderen Positionen, Geschwindigkeiten und Fahrrichtungen zu übertragen. Zusätzlich werden Meldungen, Abfragen und allgemeine Informationen verteilt. Das Netz gewährleistet einen automatischen Verbindungsauf- und -abbau für die mobilen Teilnehmer. Dies wird dadurch erreicht, daß das Netz ein System von elektronischen Mailboxen mit geeigneten Zugangskontrollen, Identifikationen und Adressierungen erzeugt unter Verwendung von E-Mail-Technologien z.B. dem zellulärem globalen mobilen Kommunikationsverfahren für mobile Teilnehmer. So entstehen außerdem eine Sicherung des Datenverkehrs gegenüber Störungen und Ausfällen mittels automatischer Fehlererkennung und -korrektur und eine Sicherung des Datenverkehrs gegen Unbefugte.

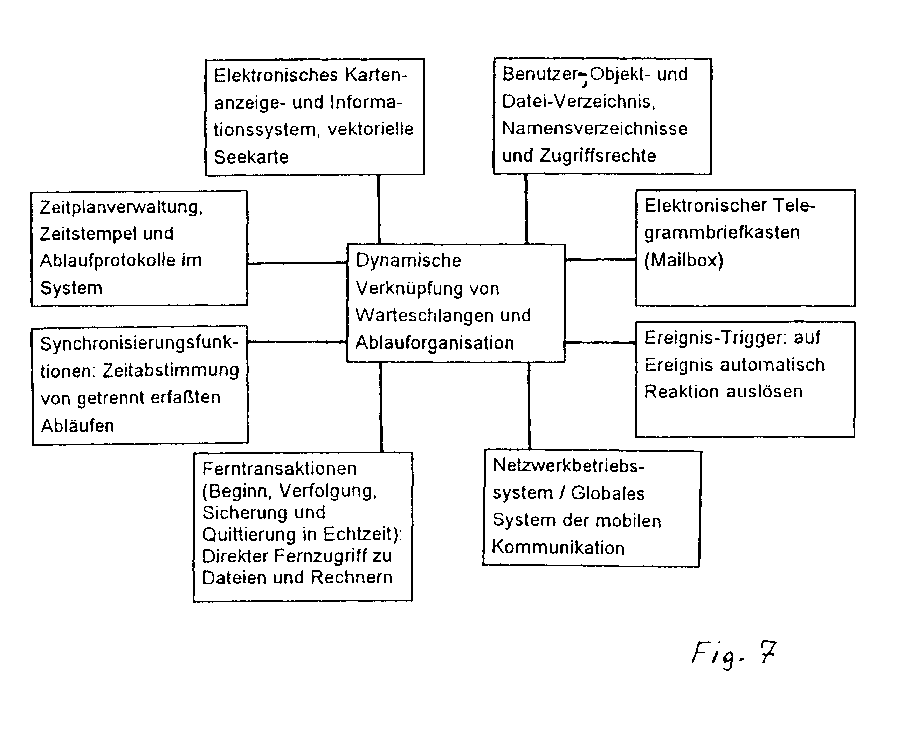

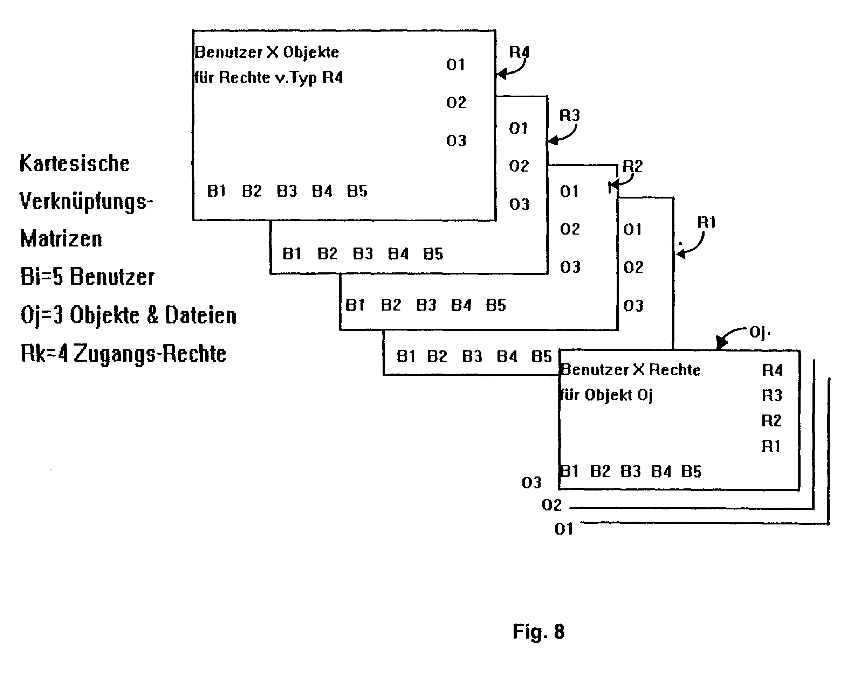

Das System besitzt eine modulare Architektur. Dadurch ist es u.a. möglich, die Anlage 1 den Anforderungen eines spezifischen Einsatzgebietes entsprechend anzupassen. Diverse Systemfunktionen werden von jeweils eigenen logischen Servern bedient, um vorteilhaft die logischen Server räumlich getrennt von den physikalischen Servern betreiben zu können. Fig. 7 zeigt die entsprechende Zusammensetzung der logischen Server. Die Adressenverwaltung (Benutzer-, Objekt- und Dateiverzeichnis) dient dazu, die Liste aller beteiligten Personen (z.B. Daten, Schnittstellen) und Standorte (z.B. Lotsenwachen) zu eröffnen, zu strukturieren, zu ergänzen und zu schließen. Femer beschreibt sie die Attribute jedes Beteiligten und seine Rechte. Mittels entsprechender Attribute für jeden Beteiligten werden aus Gründen der Datensicherheit und Netzsicherheit die Zugriffsrechte festgelegt. Auch unbekannte Objekte - feste und transiente - sind in der Adressenverwaltung eingetragen, damit sie für jeden Teilnehmer lokalisierbar sind, z.B. Mann-über-Bord-Eintragung mit Ort und Zeit, auch wenn diese Person für Teilnehmer unbekannt ist. Es sind zwei Datenbanken vorhanden: eine Datenbank zur Verwaltung von Objekten von einem physikalischen Server und eine Datenbank zur Verwaltung von hierarchisch gegliederten Klassen. Die beiden Datenbanken können sich überschneiden. Eine Änderung in der einen Datenbank kann eine Änderung in der anderen Datenbank bewirken. Zu jedem Objekt werden die entsprechenden Zugangsrechte angegeben und wie diese Zugangsrechte von welchen Beteiligten verändert werden können. Daraus ergibt sich eine kartesische Verknüpfungsmatrix für Benutzer, Objekte und Dateien, Zugangsrechte (vgl. Fig. 8).

Die geographisch relevanten Daten des jeweiligen Revieres und angrenzender Reviere sind in der Datenbank des elektronischen Kartenanzeige- und Informationssystems gespeichert in Form einer vektoriellen Seekarte, die ständig aktualisiert wird, z.B. hinsichtlich der Wassertiefen, die aus Peildaten aktuell gewonnen werden.

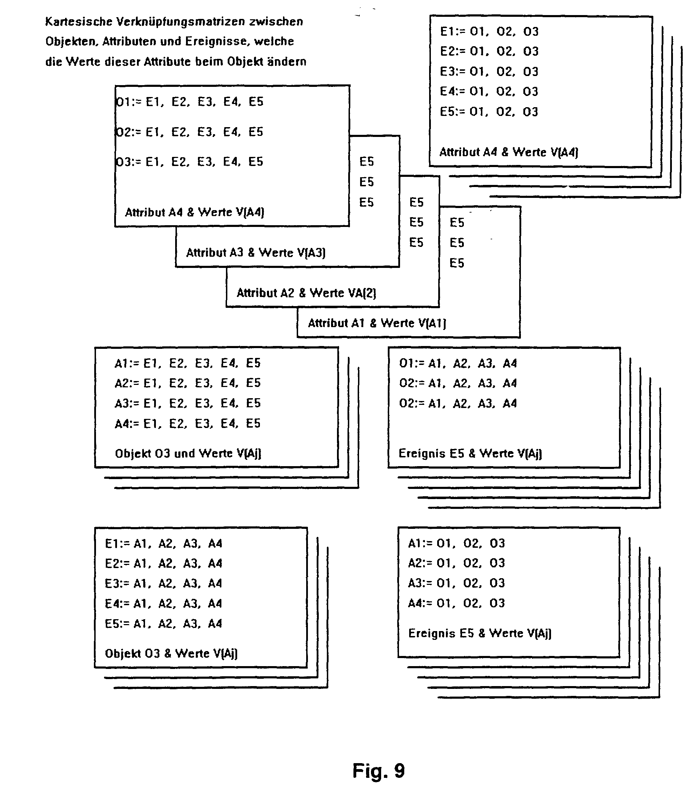

Ein weiterer Server ist zuständig für die Zeitplanverwaltung (Zeitstempel und Ablaufprotokolle im System). Mittels eines Kalenders und einer Systemuhr können sowohl Zeitpläne als auch Protokolle gemäß einer Zugangsberechtigung abgespeichert werden. Innerhalb des Zeitplanes gibt es einmalige und wiederkehrende Prozesse, deren Zyklusdauer vorgegeben wird. Die Zeitauflösung ist in mehreren Stufen hierarchisch aufgebaut. Entsprechend jeder Zeitauflösungsebene ist im Kalender eine Liste aller Aufgaben vorhanden, die mit der jeweils dazugehörigen Genauigkeit erfüllt werden muß. Jedes Ereignis wird mit einem Zeitstempel versehen, z.B. Ereignisse, die zum jeweiligen Zeitpunkt abgefragt werden, werden im Protokoll mit Attributen versehen "erfüllt", wenn sie eingetreten sind, oder "unerfüllt", wenn sie nicht eintreten. So kommen kartesische Verknüpfungsmatrizen zwischen Objekten, Attributen und Ereignissen zustande (Fig. 9). Dies bedeutet, daß zu jedem Objekt entweder Attribute oder die Ereignisse (= Attributänderung) oder beide aus der Datenbank aufgerufen werden können; zu jedem Attribut die dazugehörigen Objekte und/oder Ereignisse und zu jedem Ereignis die dazugehörigen Objekte und/oder Attribute.

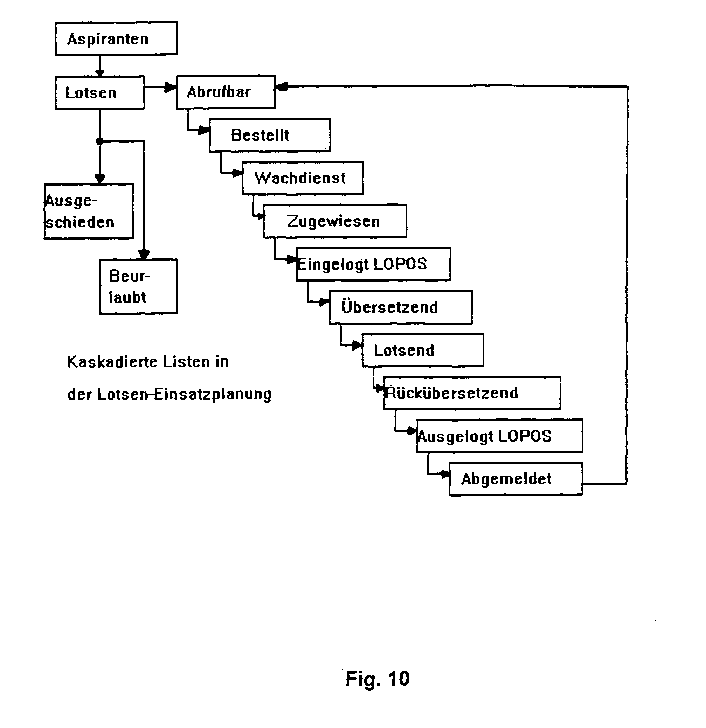

Ein weiterer Server ist für die dynamische Verknüpfung von Warteschlangen zuständig, um eine lückenlose Kommunikation zu ermöglichen zwischen dynamisch miteinander verknüpften Listen, in denen Anforderungen, Anfragen, Quittierungen, Registrierungen, Überprüfungen, Antworten, Veranlassungen, Weitermeldungen, Wiedervorlagen, Löschungen, Änderungen, Protokollierungen, Übertragungen etc. laufend stattfinden innerhalb von vorgeschriebenen Zeitintervallen. Die Vorgänge oder Eintragungen in den Warteschlangen werden je nach Eingang und/oder Priorität abgehandelt. Eine solche Warteschlange ist bspw. die Organisation der Lotsenwache (Fig. 10).

Lotsen sind aufgenommen in einer Reihe kaskadierter Listen für Beurlaubt, Abrufbar, Bestellt, Wachdienst, Zugewiesen, Eingeloggt, Übersetzend, Lotsend, Rückübersetzend, Ausgeloggt, Abgemeldet. Der Name eines Lotsen wandert mit einem Zeitstempel für die Ein- und Austragung je nach Einsatzzustand von einer Liste in die nächste, so daß zu jedem Zeitpunkt für jeden Einsatzzustand die Beteiligten bekannt sind und für jedes nachträgliche Zeitintervall das Protokoll in einer parallelen Liste festgehalten wird. Das aktuelle Zeitfenster eines Einsatzplanes wird entsprechend bestimmt. Es ist jedoch erforderlich, daß das Zeitfenster nicht kürzer sein darf als der längste Einsatz eines Lotsen. Möglich sind auch zwei aktuelle Zeitfenster: Eines von dynamischer Länge mit der gegenwärtig längsten Arbeitsdauer, ein zweites mit einer üblichen Dauer, bezogen auf die längste Durchfahrtszeit eines Schiffes durch das jeweilige Revier.

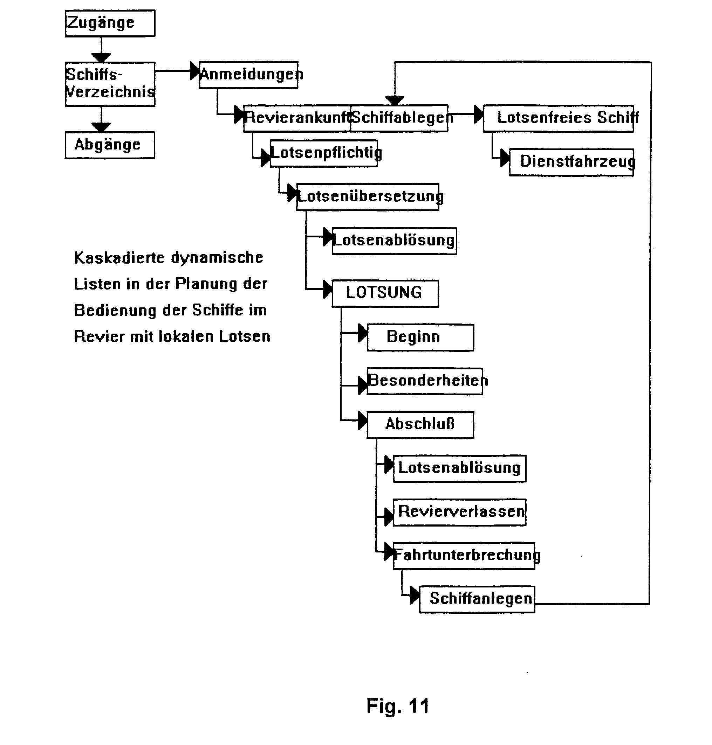

Ein weiteres Beispiel für kaskadierte dynamische Listen zeigt Fig. 11 hinsichtlich der Planung der Bedienung der Schiffe im Revier mit lokalen Lotsen. Hierfür ist unter Berücksichtigung aller möglichen Zustände eines solchen Fahrzeuges notwendig: Anmeldung (Zeit und Ort der Meldung und der erwarteten Ankunft oder Ablegens, besondere Vorkommnisse oder Bedingungen, Funkzeichen, Schiffstyp, Schiffsgröße, Kapitän, Reederei, Agentur, Tiefgang, Ladungseigenschaften, erwünschte Art und Ort der Lotsenübersetzung, Abfahrtshafen, Zielhafen, Heimathafen, Flagge, etc.), Ankunft an der Reviergrenze bzw. Ablegen (Zeit/Ortmeldung), Lotsenübersetzung (Zeit/Ort, Beginn/Ende der Übersetzung, Lotsenboot) falls lotsenpflichtig, Übernahme eines abzulösenden Lotsen in das Lotsenboot (Zeit/Ort, Beginn/Ende der Übersetzung), Belotsung des Schiffes im Revier (Zeit/Ort, Beginn/Ende, noch fehlende Schiffsdaten), besondere Vorkommnisse oder Bedingungen werden der Belotsung auf dem Schiff (Übergeschwindigkeit, Überladung, besondere Schäden, etc.) oder im Revier (Überholer, Entgegen, Sport und Schiffereischiffahrt, Havarien, Gefahren, fehlende Seezeichen, etc.) Ende der Belotsung, Ablösung durch einen anderen Lotsen oder Anlegen im Hafen, Verlassen des Revieres oder Unterbrechung der Fahrt innerhalb des Revieres.

Alle verschiedenen wichtigen Abläufe, die an verschiedenen Standorten geschehen und mit unterschiedlicher Verspätung im Server eintreffen, werden für eine vollständige Berichterstattung synchronisiert, unabhängig davon, wie lange die Zeitverzögerung bei der Übertragung ist (Synchronisation). Dazu bedient sich das System eines Synchronisierungsmechanismus auf der Basis des Zeitstempels. Ein besonderes Beispiel ist die simultane Erfassung der Bewegung eines Schiffes mittels GPS-georteter Signale und durch das Radar der Verkehrszentrale. Die beiden Positionen treffen zu verschiedenen Zeitpunkten im Server ein, werden aber im nachhinein beim Eintragen in das Protokoll miteinander synchronisiert. Dies gilt bspw. für die Relativbewegung zwischen einem Schiff und einem beweglichen Radarobjekt im Interessenbereich eines Schiffes. Die Synchronisierung ist in solchen Fällen für die Entscheidungsfindung des Lotsen an Bord des Schiffes von großer Bedeutung, ebenso für das Protokoll der Fahrzeugbegegnung zur Dokumentation einer Kollision. Es ist vorgegeben, welche Abläufe einer Synchronisierung bedürfen. Die Spitzenbelastung an Synchronisierungen - zu einem gegebenen Zeitpunkt für ein spezifisches Lotsenrevier - bestimmt die Rechenkapazität des phyisischen Servers, der die logische Serveraufgabe für dieses Revier bewältigt.

In dem System bzw. Betriebssystem sind logische Schalter (Ereignis-Trigger) eingebaut, die eine Reaktion automatisch auslösen, sobald ein bestimmtes Ereignis aus einer vordefinierten Ereignisliste (Ereigniskatalog) eintritt. Diese Reaktionen sind in Gruppen eingeteilt und beziehen sich auf Systemreaktionen (Plattenspeicher des Systems, Systemuhr, Ereignismodule, Anschlüsse an die Peripherie, Objekte im System, Sicherheitsstruktur und beauftragte, Adressenverzeichnis und Dateien, Prozesse, Datenverteilung und Warteschlangen) und Reaktionen, die für die Verkehrssteuerung auf dem Wasser von Bedeutung sind (lokale Notfallwamungen [Kollision, Strandung, Tanker, Munition, Kernbrennstoffe, etc.], lokale Notfallmeldungen [Mann über Bord, Feuer, Explosion, Kentern, Strandung, Kollision, Chemikalien, etc.], Katastrophenwamungen [Tanker, Munition, Kernbrennstoff, Seezeichenausfall], Katastrophenmeldungen, Hilferufe, Auslösen von Rettungsaktionen, Meldungen an alle z.B. Wettervorhersage, Tide an einem Ort und zu einem vorgegebenen Zeitpunkt, Durchgangsgenehmigungen, etc.).

Mittels eines elektronischen Mailbox-Systems und/oder eines weiteren Servers wird jeder Teilnehmer mit den Informationen versorgt, die für Entscheidungen und/oder für den Lotsendienst benötigt und angefordert werden. Dies dient einer besseren und effektiveren Kommunikation zwischen den Teilnehmern. Die Verfolgung einer begonnenen Korrespondenz ist Aufgabe der Ferntransaktion (Beginn, Verfolgung, Sicherung und Quittierung in Echtzeit). Dieses Verfahren beginnt eine Transaktion, stellt die Verbindung zwischen den Korrespondierenden her, bestätigt die Verbindung, setzt die Nachricht bei dem Adressaten ab und wartet auf Rückmeldung. Der Adressat schickt die Antwort an den anderen Teilnehmer und erhält die Bestätigung, daß seine Antwort dort angekommen ist. Diese Transaktion hat also einen Anfang, einen Verlauf und ein Ende. Die Transaktionsverfolgung ist in der Lage, zu jedem Zeitpunkt den Verlauf der Transaktion anzuzeigen, bzw. auf Wunsch zu unterbrechen. So kann bspw. ein Kaibetrieb bei einem aufkommenden Schiff die gegenwärtige Position und voraussichtliche Ankunftszeit erfragen, um entsprechende Planungen und Dispositionen für Ent- und Beladungen optimal durchzuführen.

Mittels eines geeigneten Konfigurationsmanagements und einer geeigneten Versionsverwaltung wird der Speicherbedarf auf ein Minimum reduziert. Es gibt dabei zwei prinzipielle Formen und ein gemischtes Verfahren der Protokollierung von Systemänderungen: Vorwärtsspeicherung, Rückwärtsspeicherung, Vor- und Rückwärtsspeicherung. Eine Versionsverwaltung ermöglicht eine schnelle Reaktualisierung des mobilen oder stationären Rechners eines Teilnehmers, der sich nach einer Pause erneut in das System als Benutzer anmeldet. Es wird dann festgestellt, wann der pausierende Rechner zum letzten Mal in dem System eingeschaltet war und übermittelt den neuen Zustand.

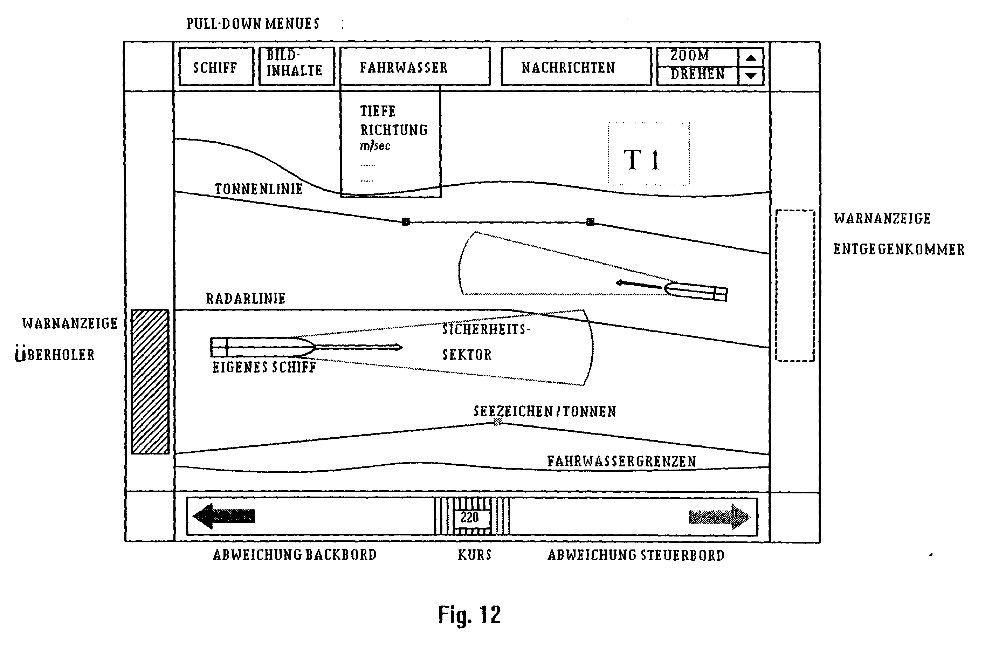

Um einen leichteren Umgang mit dem Rechner und eine schnellere Erfassung und Umsetzung der übermittelten Daten zu ermöglichen, werden die Daten im Lotsenrechner 6 mittels entsprechender Algorithmen und Masken grafisch dargestellt. Eine grafische Darstellung auf dem Bildschirm kann wie folgt aufgebaut sein (Fig. 12) und umfaßt die Elemente: Kopfleiste (Pull-down-Menüs für Schiff, Bildinhalte, Fahrwasser, Nachrichten Zoom / Drehend - Auf/Ab etc.), Fußleiste (Lageanzeiger mit Kurswahl, Wendegeschwindigkeit Backbord, Wendegeschwindigkeit Steuerbord), linker Rand (Warnanzeige für Überholer [außerhalb des aktuellen Bildausschnittes]), rechter Bildrand (Wamanzeige für Entgegenkommer [außerhalb des aktuellen Bildausschnittes]), Mittelfeld (im Standardbetrieb Abbildung der Radarlinie, Seezeichen / Tonnen, Abbildung des eigenen Schiffes mit Position und Geschwindigkeit, Abbildung anderer Schiffe im aktuellen Bildausschnitt mit Position und Geschwindigkeit, Fahrwasserbegrenzungen und ein deutlich sichtbarer Sicherheitswert). Richtungen und Geschwindigkeiten der Schiffe werden durch Vektoren abgebildet. Die Geschwindigkeiten werden grundsätzlich absolut (über Grund) angegeben. Der Bildausschnitt kann stufenweise im Maßstab und/oder in der Abbildungsrichtung verändert werden. Bei zu großem Maßstab wird für ein fahrendes Schiff auf dem Bildschirm ein entsprechendes Symbol angezeigt, vorzugsweise das IHO-Symbol (zwei konzentrische Kreise, ein Richtungs- und Geschwindigkeitsvektor als Pfeile und zwei zu den Pfeilen querliegende Striche, die durch die Schiffsmitte gehen). Alle genannten Objekte des Bildschirmes können mit Cursor angesteuert werden. Nach Anwahl eines Menüfeldes wird eine Datei geöffnet mit entsprechenden Unterfeldern.

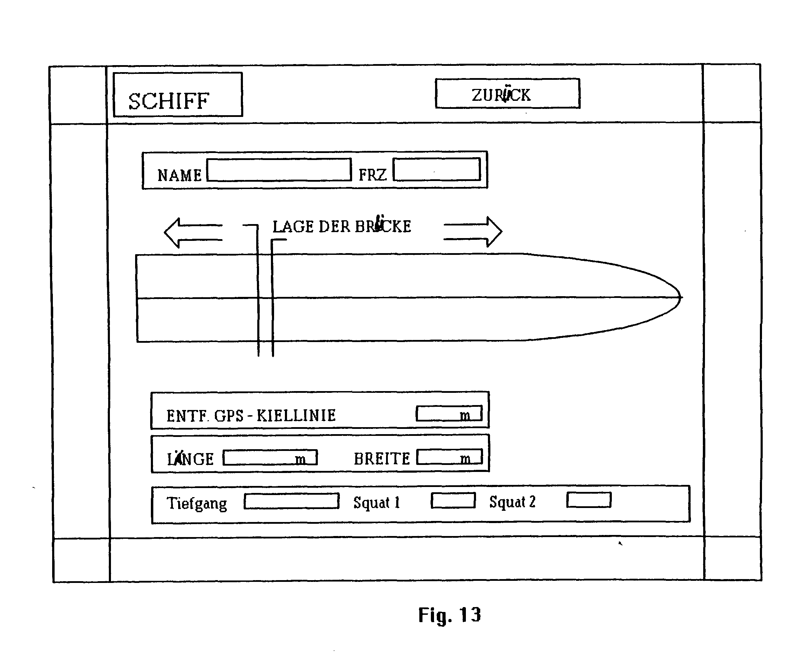

Bei Anwahl des Feldes "Schiff" wird die Datei geöffnet mit folgenden Unterfeldern: Rufzeichen/call sign, Schiffsname, IMO-Schiffstyp, Nationalität, BRZ, Länge, Breite, Tiefgang, Lage der Brücke, Bug-/Heckstrahlruder, Schraube (links-/rechtsdrehend), Verstellpropeller über der Wasserlinine, Agent. Nach Eintrag des Rufzeichens und Anwählen des Feldes "Nachrichten" erfolgt über eine vorformulierte Frage beim Schiffsmeldedienst automatisch der Eintrag aller anderen Daten des Schiffes. Nach Eintrag der Daten kann über das Menü "Schiff" eine Maske "Ergänzen" aufgerufen werden (Fig. 13). Diese Maske enthält ein Symbol Schiff, auf dem die Lage der Brücke, die Entfernung des GPS-Empfängers von der Kiellinie, Länge und Breite, der Drehpunkt des Schiffes eingetragen werden.

Über das Menüfeld "Bildinhalte" können die Bildinhalte verdichtet und ausgewählt werden: Fahrwassergrenzen, Markierungen, sonstige Karteninhalte/Objekte, Symbole (Legende), Stand der Aktualisierung, statisches Bild (eigenes Schiff bewegt sich auf dem Bildschirm), Rollbild (eigenes Schiff als festes Zeichen, Karte rollt unter dem eigenen Schiff ab). Über das Menüfeld "Fahrwasser" kann in Verbindung mit Anwahl eines beliebigen Ortes alphanumerisch oder grafisch angezeigt werden: Tiefe in dm bezogen auf MHW-MNW, aktueller Stand, Stand nach 1, 2,..., 12 Std., Strömungsrichtung in m/s (aktuell, in 1, 2... Stunden).

Bei Anwahl des Menüfeldes "Nachrichten" werden die Unterfelder aufgerufen: Wetter, Verkehrslagebericht, bedarsorientierte Nachrichten, Freitext, Adressen.

Nach Anwählen der Schaltfläche "Zoom-Drehen" kann durch Anzeigen der Symbole Auf/Ab der Bildausschnitt in Stufen verändert werden. Der Bildausschnitt enthält mindestens eine Fläche, die den Sicherheitssektor enthält; er kann auf den vollen Interessenbereich ausgedehnt werden. Bei Anwahl der Schaltfläche "Drehen" kann durch Anzeigen der Symbole Auf/Ab der Bildausschnitt horizontal, nordgerichtet oder kursorientiert eingestellt werden.

Die Warnanzeige Überholer ist so eingestellt, daß ein Schiff außerhalb des aktuellen Bildschirmes bei Eintritt in eine fest eingestellte Entfernung zum eigenen Schiff (= Interessenbereich) ein gleichmäßiges Blinken auslöst. Wird die Wamanzeige "W" angewählt, verschiebt sich der Bildausschnitt so, daß das eigenen Schiff und der Überholer sichtbar werden und eine sichtbare Beurteilung der Situation möglich ist. Die Warnanzeige "E" für Entgegenkommer funktioniert analog zur Warnanzeige "Ü". Nach Anzeigen und Markieren eines beliebigen Objektes im Bildausschnitt wird ein Fenster mit allen zum Objekt gehörenden Informationen geöffnet.

In der Fußzeile ist ein Kurszeiger eingeblendet, der in der Mitte den aktuellen Kurs angibt und nach beiden Seiten die aktuelle Wendegeschwindigkeit. Der von dem Lotsen bestimmte Kurs wird mittels der Funktionstasten "rechts - links" im Rechner 6 protokolliert. Der Rechner speichert diese Angabe als geplanten Kurs und die Zeit der Eingabe.

Der Lotsenrechner 6 umfaßt eine alphanumerische Tastatur. Zusätzlich kann über die Tastatur eine über die volle Breite verlaufende Taste "Notruf" angebracht werden. Bei Auslösung dieser Taste sendet das System ständig in dichter Folge die Position des Schiffes. Dabei wird bei den entsprechenden Stellen, wie z.B. Lotsenwachen und Verkehrszentralen, Alarm ausgelöst.

## Patentansprüche

1. Verfahren zur Navigation eines Schiffes im landnahen Seebereich, auf einem Fluß, einem Kanal oder in einem Hafen, bei dem auf einem Anzeigegerät auf dem Schiff die Position des Schiffes aus einem Speicher ausgelesen und auf einer auf dem Anzeigegerät dargestellten elektronischen Seekarte angezeigt wird, unter Verwendung von über Satellit, Funksender und ggf. Radar erhaltener Navigationsdaten, wobei die auf der elektronischen Seekarte dargestellten Angaben durch Angaben ergänzt bzw. korrigiert werden, die von einer außerhalb des Schiffes befindlichen Vermittlungsstelle auf das die elektronische Seekarte abbildende Anzeigegerät übertragen werden, **dadurch gekennzeichnet, daß** aus einem Netz von landgestützten Rechnern (2, 3, 9 - 14), die mittels einer Datenübermittlungsleitung (4) miteinander verbunden sind, über eine landgestützte Sende- und Empfangsstation (8) auf der elektronischen Seekarte auf der Basis geo-referenzierter Koordinaten abzubildende Daten auf einen an Bord des Schiffes befindlichen mobilen Rechner (6) über eine an diesen angeschlossene Sende- und Empfangseinheit (20) übertragen werden und daß zur Ermittlung von Richtung, Driftwinkel, Geschwindigkeit, Wendegeschwindigkeit und Lage des Schiffes auf diesem im Abstand voneinander eine Antenneneinheit A (7) mit einer DGPS-Empfangseinheit (22, 23) und eine Antenneneinheit B (25) mit einer DGPS-Empfangseinheit (27, 28) angebracht werden, wobei Daten der Antenneneinheit A (7) von deren Sende- und Empfangseinheit (21) an die Sende- und Empfangseinheit (20) des mobilen Rechners (6) und von deren weiteren Sende- und Empfangseinheit (24) über die landgestützte Sende- und Empfangsstation (8) in die Rechner (2, 3, 9 - 14) übertragen werden, und wobei Daten der Antenneneinheit B (25) von deren Sendeeinheit (26) ebenfalls an die Sende- und Empfangseinheit (20) des mobilen Rechners (6) übertragen werden.

2. Verfahren nach Anspruch 1, **dadurch gekennzeichnet, daß** Kommunikationsmittel zur Erfassung von lokalen und/oder verkehrsrelevanten und/oder navigatorischen und/oder meteorologischen und/oder hydrographischen und/oder hydrodynamischen Informationen an die mobilen Rechner (6) angeschlossen sind und Daten an den mobilen Rechner (6) übermitteln.

3. Verfahren nach Anspruch 1 und 2, **dadurch gekennzeichnet, daß** die übertragenen abgebildeten Daten dynamische Daten und/oder Positionsdaten von mobilen Objekten und/oder Daten zur Mitteilungsübermittlung und/oder navigatorische Daten und/oder meteorologische Daten und/oder hydrographische Daten umfassen.

4. Verfahren nach Anspruch 1 und 2, **dadurch gekennzeichnet, daß** in dem Netz von Rechnern (2, 3, 9 - 14) Daten von Eigenschaften von mobilen Schiffen und/oder an dem Verfahren beteiligter Stellen und/oder Personen gespeichert sind.

5. Verfahren nach Anspruch 1 und 2, **dadurch gekennzeichnet, daß** in dem Netz von Rechnern (2, 3, 9 -14) Daten über hydrographische und/oder meteorologische Verhältnisse gespeichert sind und/oder Daten bzgl. Prognosen der orts- und/oder zeitbezogenen Verhältnisse gespeichert sind und/oder ermittelt werden.

6. Verfahren nach Anspruch 1 und 2, **dadurch gekennzeichnet, daß** in dem Netz von Rechnern (2, 3, 9 - 14) dreidimensionale geo-referenzierte Datenbanken mit standardisierter Oberfläche als elektronische Seekarten vorhanden sind.

7. Verfahren nach Anspruch 1 und 2, **dadurch gekennzeichnet, daß** in dem Netz von Rechnern (2, 3, 9 - 14) Daten eines oder mehrerer digitalisierter Radarbilder vorhanden sind.

8. Verfahren nach Anspruch 6, **dadurch gekennzeichnet, daß** die Radarechos von Schiffen im Fahrwasser auf der Benutzeroberfläche der dreidimensionalen geo-referenzierten Datenbank abgebildet werden.

9. Verfahren nach Anspruch 8, **dadurch gekennzeichnet, daß** alle geo-referenzierten Datenbanken im Netz von Rechnern (2, 3, 9 - 14) laufend miteinander kommunizieren, um sich gegenseitig zu aktualisieren.

10. Verfahren nach Anspruch 1 bis 9, **dadurch gekennzeichnet, daß** aus den von der Antenneneinheit A (7) mit den GPS- und DGPS-Empfangseinheiten (22, 23) und die von der Antenneneinheit B (25) mit den GPS- und DGPS-Empfangseinheiten (27, 28) an den mobilen Rechner (6) an Bord des Schiffes übermittelten Positionsdaten und objekteigenen Daten die Position und die dynamischen Daten des Schiffes ermittelt werden, und die ermittelten Daten an das Netz von Rechnern (2, 3, 9 - 14) mit einem Server (2) übermittelt werden und in den Rechnern (2, 3, 9 - 14) die für die Umgebung des Schiffes und für das Schiff die relevanten Daten ermittelt werden und an den mobilen Rechner (6) übertragen werden.

11. Verfahren nach Anspruch 10, **dadurch gekennzeichnet, daß** aus den von der Antenneneinheit A (7) mit der GPS-Empfangseinheit (22) und der Antenneneinheit B (25), die in einem festgelegten Abstand von der Antenneneinheit A (7) lösbar angebracht ist, mit der GPS-Empfangseinheit (27) an den mobilen Rechner (6) an Bord des Schiffes übermittelten Positionsdaten und objekteigenen Daten die Position und die dynamischen Daten des Schiffes ermittelt werden.

12. Verfahren nach Anspruch 1 bis 11, **dadurch gekennzeichnet, daß** die Daten aller Schiffe und/oder Abläufe und/oder das Verhalten der Schiffe und/oder der Ereignisse vollständig protokolliert werden.

13. Verfahren nach Anspruch 1 bis 12, **dadurch gekennzeichnet, daß** die Daten Zeitstempel zur zeitlichen Protokollierung umfassen.

14. Verfahren nach Anspruch 1 bis 13, **dadurch gekennzeichnet, daß** die Daten Prioritätsflags umfassen und gemäß dieser Prioritätsflags übermittelt werden.

15. Verfahren nach Anspruch 1 bis 14, **dadurch gekennzeichnet, daß** die Daten aktualisiert an die mobilen Rechner (6) an Bord des Schiffes übermittelt werden.

16. Verfahren nach Anspruch 1 bis 15, **dadurch gekennzeichnet, daß** die an die mobilen Rechner (6) an Bord der Schiffe übermittelten Daten korrigiert werden.

17. Verfahren nach Anspruch 1 bis 16, **dadurch gekennzeichnet, daß** die Daten, die an den und von dem mobilen Rechner (6) an Bord des Schiffes übermittelt werden, automatisiert in festgelegten Zeitzyklen und/oder nach Auslösung übertragen werden.

18. Verfahren nach Anspruch 1 bis 17, **dadurch gekennzeichnet, daß** die Positionierung der Antenneneinheiten A (7) und B (25) oder weitere Antenneneinheiten zueinander so vermessen wird, daß deren Abstand unter Zuhilfenahme geeigneter mathematischer Verfahren (iterative Filter) als Referenz verwendet werden kann.

19. Verfahren nach Anspruch 1 bis 18, **dadurch gekennzeichnet, daß** die Verkehrslenkung ohne bemannte Landzentralen zentral und/oder dezentral durch die Interkommunikation zwischen den mit mobilen Rechnern (6) versehenen Teilnehmern im Revier durchgeführt wird.

20. Verfahren nach Anspruch 1 bis 18, **dadurch gekennzeichnet, daß** zur Ausbildung eines über das ganze Revier verteilten virtuellen Supercomputers die Rechner an Land bestimmte lokale Rechenaufgaben an die mobilen Rechner (6) an Bord der diversen Schiffe im Revier als abgesetzte intelligente Sensoren delegieren und die Datenfusion der verschiedenen Sensoren zu einem Gesamtbild laufend selber zusammenstellen, wobei die verteilten Datenaufnahmen jeweils mit dem Zeitstempel der Aufnahme und mit dem Positionsstempel des DGPS-Sensors versehen werden, so daß kausale Ketten von Ereignissen, die sich zwei- oder dreidimensional verteilt entwickeln, über die Protokolliereinrichtung des Gesamtsystems exakt rekonstruiert werden können.

21. Anlage zur Navigation eines Schiffes im landnahen Seebereich, auf einem Fluß, einem Kanal oder in einem Hafen, bei der auf einem Anzeigegerät auf dem Schiff die Position des Schiffes auf einer von einem Speicher ausgelesenen und auf dem Anzeigegerät dargestellten elektronischen Seekarte angezeigt und die lokale Verkehrssituation in der Umgebung des Schiffes dezentral erfaßt wird und landgestützte Rechner (2, 3, 9 - 14) über eine Datenübermittlungsleitung (4) miteinander und mit einer landgestützten Sende- und Empfangsstation (8) verbunden sind, **dadurch gekennzeichnet, daß** auf dem Schiff ein mobiler Rechner (6) mit einer angeschlossenen Sende- und Empfangseinheit (20) und in Abstand voneinander eine Antenneneinheit A (7) mit einer DGPS-Empfangseinheit (22, 23) und zumindest eine weitere Antenneneinheit B (25) mit einer DGPS-Empfangseinheit (27, 28) zur Ermittlung von Richtung, Driftwinkel, Geschwindigkeit, Wendegeschwindigkeit und Lage des Schiffes im Gewässer und zur zeitnahen Abbildung dieser Daten auf einer geo-referenzierten projektionsfreien Datenbank mit standardisierter Benutzeroberfläche angeordnet sind, die mit dem mobilen Rechner (6) in Wirkverbindung stehen.

22. Vorrichtung nach Anspruch 21, **dadurch gekennzeichnet, daß** die Antenneneinheit A (7) eine Sende- und Empfangseinheit (21) zur Datenübermittlung an die Sende- und Empfangseinheit (20) des mobilen Rechners (6) und eine Sende- und Empfangseinheit (24) zur Datenübermittlung an die landgestützten Sende- und Empfangsstation (8) aufweist.

23. Vorrichtung nach Anspruch 21, **dadurch gekennzeichnet, daß** die Antenneneinheit B (25) eine Sendeeinheit (26) zur Datenübermittlung an die Sende- und Empfangseinheit (20) des mobilen Rechners (6) aufweist.

24. Vorrichtung nach Anspruch 21 bis 23, **dadurch gekennzeichnet, daß** die Antenneneinheit A (7) und die Antenneneinheit B (25) oder weitere Antenneneinheiten räumlich voneinander getrennt am Schiff lösbar angebracht sind.

25. Vorrichtung nach Anspruch 24, **dadurch gekennzeichnet, daß** die Antenneneinheit A (7) und die Antenneneinheit B (25) oder weitere Antenneneinheiten in einem festgelegten oder nachträglich feststellbaren Abstand voneinander getrennt lösbar angebracht sind.

26. Vorrichtung nach Anspruch 21, **dadurch gekennzeichnet, daß** mit dem mobilen Rechner (6) Kommunikationsmittel zur Erfassung von lokalen und/oder verkehrsrelevanten und/oder navigatorischen und/oder meteorologischen und/oder hydrographischen Informationen verbunden sind.

27. Vorrichtung nach Anspruch 21, **dadurch gekennzeichnet, daß** mit dem mobilen Rechner (6) Windmesser und/oder Strömungsmesser und/oder Echolote und/oder andere metereologische, hydrographische oder ozeanographische Sensoren verbunden sind.

## Claims

1. Procedure for navigating a ship in coastal waters, on a river, in a channel or a harbor, by which the position of the ship can be read out of a memory device and is visualized on an electronic navigation chart of a display device, applying navigation data received by satellite, radio transmission, and eventually radar, whereby the values or indications displayed on the electronic navigation chart can be modified and corrected by values or indications obtained from an intermediary station, located at distance from the ship, and transmitted to the display device that depicts the electronic navigation chart chart; **characterized in that** a network of shore-based computers (2, 3, 9-14) linked to each other by a data-transmission line (4), data that are displayed on an electronic navigation chart by means of a shore-based radio transmitting and receiving station (8) on the basis of geo-referential coordinates, and transmitted to a mobile computer (6) stationed on board of a ship by a radio transmitting and receiving unit (20), linked to the on-board computer (6), and that, in order to determine direction, drift angle, velocity, rate of turn and location of the ship, an aerial unit A (7), incorporating a DGPS receiving unit (22, 23), and an aerial unit B (25), incorporating a DGPS receiving unit (27, 28), are mounted at a distance to each other on the ship, whereby the data of the aerial unit A (7) are transmitted by its radio transmitting and receiving unit (21) to the radio transmitting and receiving unit (20) of the mobile computer (6), and are further transmitted from their additional radio transmitting and receiving unit (24) over the shore-based radio transmitting and receiving station (8) to the computers (2, 3, 9-14), and whereby data from the aerial unit B (25) are also transmitted by its transmitter unit (26) to the transmitter and receiving station (20) of the mobile computer (6).

2. Procedure in accordance with claim 1, **characterized in that** means of communication to register local and/or traffic-relevant and/or navigational and/or meteorological and/or hydrographical and/or hydrodynamic information are linked to the mobile computer (6) and transmit data to the mobile computer (6).

3. Procedures in accordance with claims 1 and 2, **characterized in that** the data transmitted and displayed comprise dynamic data and/or position data of mobile objects and/or data for message conveyance and/or navigation data and/or meteorological data and/or hydrographic data.

4. Procedures in accordance with claims 1 and 2, **characterized in that** data pertaining to the properties of mobile vessels and/or participating offices and/or persons are stored in a network of computers (2, 3, 9-14).

5. Procedures in accordance with claims 1 and 2, **characterized in that** data pertaining to hydrographic and/or meteorological conditions are stored, and/or data pertaining to prognoses on conditions related to time and/or location are stored and/or obtained in a network of computers (2, 3, 9-14).

6. Procedures in accordance with claims 1 and 2, **characterized in that** three-dimensional geo-referential databases with standardized display are made available as electronic navigation charts in a network of computers (2, 3, 9-14).

7. Procedures in accordance with claims 1 and 2, **characterized in that** data of one or several digitized radar images are available in the network of computers (2, 3, 9-14).

8. Procedures in accordance with claim 6, **characterized in that** the radar echoes of ships located in the fairway are represented or displayed on the users display of the three-dimensional, geo-referential database.

9. Procedures in accordance with claim 8, **characterized in that** all geo-referential databases currently communicate with each other in a network of computers (2, 3, 9-14), in order to generate mutual updates.

10. Procedures in accordance with claims 1 to 9, **characterized in that** the position and the dynamic data of a vessel can be determined on the basis of position data and data pertinent to the object, to be transmitted from the aerial unit A (7) equipped with the GPS and DGPS receiving units (22, 23) and those transmitted from the aerial unit B with the GPS and DGPS receiving units (27, 28) to the mobile computer (6) aboard of the vessel; and that the determined data are transmitted by a server (2) to the network of computers (2, 3, 9-14), and that data relevant to the vessel and its surrounding are determined by the computers (2, 3, 9-14) and further transmitted to the mobile computer (6).

11. Procedures in accordance with claim 10, **characterized in that** the position data and the data pertaining to the object is determined by position data and data pertaining to the object transmitted to the mobile computer on board of the vessel by the aerial unit A (7), equipped with the GPS receiving unit (22), and the aerial unit B (25) which is mounted in a detachable manner and at a definite distance from aerial A (7) and equipped with a GPS receiving unit (27).

12. Procedures in accordance with claims 1 to 11, **characterized in that** the data of all vessels and/or proceedings and/or characteristics and/or occurrences are completely recorded.

13. Procedures in accordance with claims 1 to 12, **characterized in that** a time stamp is allocated to the data to assure time-specific records.

14. Procedures in accordance with claims 1 to 13, **characterized in that** priority flags are allocated to the data and that the data is transmitted in accordance with these priority flags.

15. Procedures in accordance with claims 1 to 14, **characterized in that** the data are transmitted in an updated version to the mobile computer (6) stationed on board of the vessel.

16. Procedures in accordance with claims 1 to 15, **characterized in that** the data transmitted to the mobile computer (6) stationed on board of the vessel are being corrected or revised.

17. Procedures in accordance with claims 1 to 16, **characterized in that** the data transmitted to and from the mobile computer (6) stationed on board of the vessel are automatically transmitted in predetermined time cycles and/or by means of any activation of the process.

18. Procedures in accordance with claims 1 to 17, **characterized in that** the positioning of the aerial units A (7) and B (25), or additional aerials, is computed in reference to each other that their distance serves as a reference applying adequate mathematical procedures (iterative filters).

19. Procedures in accordance with claims 1 to 18, **characterized in that** the control of traffic is conducted without manned stations ashore, centralized and/or decentralized by means of intercommunication among the participators who are equipped with mobile computers (6) within the traffic control area.

20. Procedures in accordance with claims 1 to 18, **characterized in that**, in order to establish a virtual super computer network distributed throughout the pilot water district, the shore-based computers delegate certain local computing tasks to the mobile computers (6) stationed on board of the vessels in the pilot waters as off-set intelligent sensors and the fusion of data from the various sensors yields an overall picture, whereby each step of dispersed data collection receives a time stamp and position stamp provided by the DGPS sensor, so that causal chains of events developing in a two-dimensional and three-dimensional pattern of distribution can be accurately reconstructed by means of the recording devices of the entire system.

21. Installation for navigating a ship in coastal waters, on a river, in a canal or in a harbor, by which the position of the ship read out of a memory is visualized on an electronic navigation chart of same device aboard, registering the local vessel traffic situation in the surrounding of the ship in a decentralized manner, with shore-based computers (2, 3, 9-14) that are linked by a data-transmission line (4) to a radio transmitting and receiving station (8), **characterized in that** a mobile computer stationed on a ship (6) is connected to a radio transmitting and receiving unit (20), and at distance to each other an aerial unit A (7) equipped with a DGPS receiving unit (22, 23), and at least one more aerial unit B (25) equipped with a DGPS receiving unit (27, 28), to determine direction, drift angle, velocity, rate of turn and position of a ship in the fairway and to visualize these data in real time on a geo-referential, projection-free database incorporating a standardized user display, are thus arranged that they interact with the mobile computer (6).

22. Device in accordance with claim 21, **characterized in that** the aerial unit A (7) disposes of a radio transmitting and receiving unit (21) to transmit data to the radio transmitting and receiving unit (20) of the mobile computer (6), as well as a radio transmitting and receiving unit (24) to transmit data to the land-based radio transmitting and receiving unit (8).

23. Device in accordance with claim 21, **characterized in that** the aerial unit B (25) disposes of a transmitter (26) to transmit data to the radio transmitting and receiving unit (20) of the mobile computer (6).

24. Device in accordance with claims 21 to 23, **characterized in that** the aerial unit A (7) and the aerial unit B (25), or any additional aerial units, are separately mounted in a detachable manner to the ship.

25. Device in accordance with claim 24, **characterized in that** the aerial unit A (7) and the aerial unit B (25), or any additional aerial units, are mounted in a detachable manner at such a distance from each other which is defined or to be subsequently defined.

26. Device in accordance with claim 21, **characterized in that** the mobile computer (6) is linked to means of communication designed to collect local and/or traffic-relevant and/or navigational and/or meteorological and/or hydrographic information.

27. Device in accordance with claim 21, **characterized in that** the mobile computer (6) is linked to a wind speedometer and/or current meter and/or echo depth finders and/or other meteorological, hydrographical or oceanographic sensors.

## Revendications

1. Procédé pour la navigation d'un navire en zone côtière, sur un fleuve, un canal ou dans un port, dans lequel la position du navire est lue dans une mémoire d'un appareil de visualisation placé sur le navire et elle est affichée sur une carte nautique électronique représentée sur l'appareil de visualisation, en se servant de données de navigation reçues par satellite, par radiophonie et, le cas échéant, par radar, les indications représentées sur la carte nautique électronique étant complétées ou corrigées par des indications qui sont transmises à l'appareil de visualisation représentant la carte nautique électronique par un service central situé en dehors du navire, **caractérisé en ce que**, à partir d'un réseau d'ordinateurs placés à terre (2, 3, 9-14) reliés entre eux par un canal de transmission de données (4), en passant par une station émettrice et réceptrice (8) placée à terre, les données à représenter sur la carte nautique électronique sur la base de coordonnées géo-référencées sont transmises à un ordinateur mobile (6) se trouvant à bord du navire à l'aide d'une unité émettrice et réceptrice (20) branchée sur ce dernier, et **en ce que**, pour déterminer la direction, l'angle de dérive, la vitesse, la vitesse de virement et la position du navire, une unité d'antennes A (7) munie d'une unité réceptrice DGPS (22, 23) et une unité d'antennes B (25) munie d'une unité réceptrice DGPS (27, 28) sont installées à distance l'une de l'autre à bord du navire, les données de l'unité d'antennes A (7) étant transmises par son unité émettrice et réceptrice (21) à l'unité émettrice et réceptrice (20) de l'ordinateur mobile (6) et par son unité émettrice et réceptrice supplémentaire (24) par l'intermédiaire de la station émettrice et réceptrice (8) placée à terre aux ordinateurs (2, 3, 9-14), et les données de l'unité d'antennes B (25) étant transmises par son unité émettrice (26) également à l'unité émettrice et réceptrice (20) de l'ordinateur mobile(6).

2. Procédé selon la revendication 1, **caractérisé en ce que** des moyens de communication prévus pour la réception d'informations locales et/ou importantes pour le trafic et/ou pour la navigation et/ou météorologiques et/ou hydrographiques et/ou hydrodynamiques sont branchés sur l'ordinateur mobile (6) et transmettent des données à l'ordinateur mobile (6).

3. Procédé selon la revendication 1 et 2, **caractérisé en ce que** les données visualisées transmises comprennent des données dynamiques et/ou des données de position d'objets mobiles et/ou des données destinées à la transmission de messages et/ou des données pour la navigation et/ou des données météorologiques et/ou des données hydrographiques.

4. Procédé selon les revendications 1 et 2, **caractérisé en ce que** des données relatives aux caractéristiques de navires mobiles et/ou des services et/ou des personnes impliqués dans le procédé sont mémorisées dans le réseau d'ordinateurs (2, 3, 9-14).

5. Procédé selon les revendications 1 et 2, **caractérisé en ce que**, dans le réseau d'ordinateurs (2, 3, 9-14), des données relatives aux conditions hydrographiques et/ou météorologiques sont mémorisées et/ou des données concernant les prévisions des conditions dans un lieu et/ou à un moment donné sont mémorisées et/ou déterminées.

6. Procédé selon les revendications 1 et 2, **caractérisé en ce que** des banques de données géo-référencées à trois dimensions, avec surface standardisée sont disponibles sous forme de cartes nautiques électroniques dans le réseau d'ordinateurs (2, 3, 9-14).

7. Procédé selon les revendications 1 et 2, **caractérisé en ce que** des données d'une ou de plusieurs images radar numérisées sont disponibles dans le réseau d'ordinateurs (2, 3, 9-14).

8. Procédé selon la revendication 6, **caractérisé en ce que** les échos radar des navires se trouvant sur la voie navigable sont affichés sur l'interface d'utilisateur de la banque de données géo-référencée à trois dimensions.

9. Procédé selon la revendication 8, **caractérisé en ce que** toutes les banques de données géo-référencées se trouvant dans le réseau d'ordinateurs (2, 3, 9-14) communiquent constamment entre elles pour s'actualiser mutuellement.

10. Procédé selon les revendications 1 à 9, **caractérisé en ce que** la position et les données dynamiques du navire sont déterminées à partir des données de position et des données propres à l'objet, transmises à l'ordinateur mobile (6) placé à bord du navire par l'unité d'antennes A (7) avec les unités réceptrices GPS et DGPS (22, 23) et par l'unité d'antennes B (25) avec les unités réceptrices GPS et DGPS (27, 28), **en ce que** les données déterminées sont transmises au réseau d'ordinateurs (2, 3, 9-14) à l'aide d'un serveur (2) et les données importantes pour le navire et ses parages sont déterminées dans les ordinateurs (2, 3, 9-14), et transmises à l'ordinateur mobile (6).

11. Procédé selon la revendication 10, **caractérisé en ce que** la position et les données dynamiques du navire sont déterminées à partir des données de position et des données propres à l'objet, transmises à l'ordinateur mobile (6) placé à bord du navire par l'unité d'antennes A (7) avec l'unité réceptrice GPS (22) et par l'unité d'antennes B (25) avec l'unité réceptrice GPS (27), l'unité d'antennes B (25) étant installée de façon amovible à une distance fixée de l'unité d'antennes A (7).

12. Procédé selon les revendications 1 à 11, **caractérisé en ce que** les données de tous les navires et/ou les déroulements et/ou le comportement des navires et/ou des événements sont consignés de façon complète.

13. Procédé selon les revendications 1 à 12, **caractérisé en ce que** les données comprennent des tampons dateurs pour une consignation temporelle.

14. Procédé selon les revendications 1 à 13, **caractérisé en ce que** les données comprennent des indicateurs de priorité et **en ce qu'**elles sont transmises conformément à ces indicateurs de priorité.

15. Procédé selon les revendications 1 à 14, **caractérisé en ce que** les données actualisées sont transmises aux ordinateurs mobiles (6) placés à bord du navire.

16. Procédé selon les revendications 1 à 15, **caractérisé en ce que** les données transmises aux ordinateurs mobiles (6) placés à bord du navire sont corrigées.

17. Procédé selon les revendications 1 à 16, **caractérisé en ce que** les données transmises vers et par l'ordinateur mobile (6) placé à bord du navire sont transmises automatiquement à un rythme fixe et/ou après déclenchement.

18. Procédé selon les revendications 1 à 17, **caractérisé en ce que** le positionnement des unités d'antennes A (7) et B (25) ou d'autres unités d'antennes les unes par rapport aux autres est choisi de telle sorte que leurs distances puissent servir de référence en ayant recours à des procédés mathématiques appropriés (filtres itératifs).

19. Procédé selon les revendications 1 à 18, **caractérisé en ce que** le guidage du trafic est effectué sans centrale terrestre équipée de personnel de façon centralisée et/ou décentralisée, par intercommunication entre les participants munis d'ordinateurs mobiles (6) se trouvant sur zone.

20. Procédé selon les revendications 1 à 18, **caractérisé en ce que**, pour créer un superordinateur virtuel réparti sur l'ensemble de la zone, les ordinateurs placés à terre délèguent certaines tâches de calcul locales aux ordinateurs mobiles (6) placés à bord des différents navires se trouvant sur zone et servant de capteurs intelligents décentralisés et ils effectuent eux-mêmes la fusion continue des données des différents capteurs pour former une image d'ensemble, les acquisitions de données déléguées étant chaque fois marquées du tampon dateur de l'acquisition et du tampon de position du capteur DGPS, de sorte que les chaînes causales d'événements qui se développent en deux ou trois dimensions puissent être reconstruites exactement à l'aide de l'installation de consignation de l'ensemble du système.

21. Installation pour la navigation d'un navire en zone côtière, sur un fleuve, un canal ou dans un port, avec laquelle, sur un appareil de visualisation placé sur le navire, la position du navire est affichée sur une carte nautique électronique extraite d'une mémoire et représentée sur l'appareil de visualisation, la situation du trafic dans les parages du navire est saisie de façon décentralisée et des ordinateurs (2, 3, 9-14) sont reliés entre eux et avec une station émettrice et réceptrice (8) placée à terre au moyen d'un canal de transmission de données (4), **caractérisé en ce qu'**il y a à bord du navire, pour déterminer la direction, l'angle de dérive, la vitesse, la vitesse de virement et la position du navire sur zone et pour l'affichage rapide de ces données sur une base de données géo-référencée sans projection avec interface d'utilisateur standardisé, un ordinateur mobile (6) connecté à une unité émettrice et réceptrice (20) et, séparées l'une de l'autre, une unité d'antennes A (7) avec une unité réceptrice DGPS (22, 23) et au moins une autre unité d'antennes B (25) avec une unité réceptrice DGPS (27, 28) qui se trouvent tous en communication fonctionnelle avec l'ordinateur mobile (6).

22. Dispositif selon la revendication 21, **caractérisé en ce que** l'unité d'antennes A (7) possède une unité émettrice et réceptrice (21) pour transmettre des données à l'unité émettrice et réceptrice (20) de l'ordinateur mobile (6) et une unité émettrice et réceptrice (24) pour transmettre des données à la station émettrice et réceptrice (8) terrestre.

23. Dispositif selon la revendication 21, **caractérisé en ce** l'unité d'antennes B (25) possède une unité émettrice (26) pour transmettre des données à l'unité émettrice et réceptrice (20) de l'ordinateur mobile (6).

24. Dispositif selon les revendications 21 à 23, **caractérisé en ce que** l'unité d'antennes A (7) et l'unité d'antennes B (25) ou d'autres unités d'antennes sont installées sur le navire séparées les unes des autres et de façon amovible.

25. Dispositif selon la revendication 24, **caractérisé en ce que** l'unité d'antennes A (7) et l'unité d'antennes B (25) ou d'autres unités d'antennes sont installées séparées les unes des autres de façon amovible à une distance fixée ou vérifiable postérieurement.

26. Dispositif selon la revendication 21, **caractérisé en ce que** des moyens de communication servant à saisir des informations locales et/ou importantes pour le trafic et/ou pour la navigation et/ou météorologiques et/ou hydrographiques sont raccordés à l'ordinateur mobile (6).

27. Dispositif selon la revendication 21, **caractérisé en ce que** des anémomètres et/ou des courantomètres et/ou des sondeurs acoustiques et/ou d'autres capteurs météorologiques, hydrographiques ou océanographiques sont raccordés à l'ordinateur mobile (6).
